# EUROPEAN PATENT APPLICATION

(11) **EP 4 827 038 A1**
(43) Date of publication of application: **21.10.2026**
(21) Application number: 25782892.1
(22) Date of filing: 31.03.2025
(51) Int. Cl.: H04L 5/14, H04W 72/0453, H04L 5/00, H04W 72/0446, H04W 72/231, H04W 8/24

(54) **METHOD AND DEVICE FOR CONFIGURING RESOURCE FOR SBFD OPERATION**

(30) Priority: 05.04.2024 KR 20240046716
(71) Applicant: Hyundai Motor Company, Seoul 06797 (KR); Kia Corporation, Seoul 06797 (KR)
(72) Inventor: LEE, Jeong Su, Hwaseong-si, Gyeonggi-do 18280 (KR); SUH, Young Kil, Hwaseong-si, Gyeonggi-do 18280 (KR); HONG, Ui Hyun, Hwaseong-si, Gyeonggi-do 18280 (KR); HAHN, Gene Back, Hwaseong-si, Gyeonggi-do 18280 (KR)
(74) Representative: Isarpatent
(86) International application number: PCT/KR2025/004149
(87) International publication number: WO 2025/211670

(57) **Abstract**

Disclosed are a method and a device for configuring a resource for a subband full duplex (SBFD) operation. A method of a user equipment (UE) comprises the steps of: receiving SBFD configuration information from a base station; identifying a start point of an uplink (UL) subband in at least one of a downlink (DL) interval and a flexible (FL) interval in the time domain on the basis of information included in the SBFD configuration information; and performing UL communication with the base station by using the UL subband on the basis of the start time point.

## Description

### [Technical Field]

The present disclosure relates to an enhanced communication technique, and more particularly, to a technique for configuring time and/or frequency resources for subband full-duplex (SBFD) operation.

### [Background Art]

A communication network (e.g., 5G communication network or 6G communication network) is being developed to provide enhanced communication services compared to the existing communication networks (e.g., long term evolution (LTE), LTE-Advanced (LTE-A), etc.). The 5G communication network (e.g., New Radio (NR) communication network) can support frequency bands both below 6GHz and above 6GHz. In other words, the 5G communication network can support both frequency range 1 (FR1) and/or FR2 bands. Compared to the LTE communication network, the 5G communication network can support various communication services and scenarios. For example, usage scenarios of the 5G communication network may include enhanced Mobile BroadBand (eMBB), Ultra Reliable Low Latency Communication (URLLC), massive Machine Type Communication (mMTC), and the like.

The 6G communication network can support a variety of communication services and scenarios compared to the 5G communication network. The 6G communication network can meet the requirements of hyper-performance, hyper-bandwidth, hyper-space, hyper-precision, hyper-intelligence, and/or hyper-reliability. The 6G communication network can support diverse and wide frequency bands and can be applied to various usage scenarios such as terrestrial communication, non-terrestrial communication, sidelink communication, and the like.

Meanwhile, a communication network may support a subband full-duplex (SBFD) operation. In a communication network supporting the SBFD operation, an uplink (UL) subband may be configured in a downlink (DL) duration. Methods for indicating a location of the UL subband configured in the DL duration may be required. In addition, DL transmission may occur in the UL subband, and in this case, methods for resolving a collision between the DL transmission and UL transmission may be required.

### [Disclosure]

### [Technical Problem]

The present disclosure is directed to providing a method and an apparatus for configuring time and/or frequency resources for SBFD operation.

### [Technical Solution]

A method of a user equipment (UE), according to exemplary embodiments of the present disclosure for achieving the above-described objective, may comprise: receiving, from a base station, subband full-duplex (SBFD) configuration information; identifying a start point of an uplink (UL) subband in at least one duration among a downlink (DL) duration or a flexible (FL) duration in time domain, based on information included in the SBFD configuration information; and performing UL communication with the base station using the UL subband based on the start point.

The method may further comprise: identifying an end point of the UL subband in the at least one duration among the DL duration or the FL duration in time domain, based on the information included in the SBFD configuration information, wherein the UL communication is performed in at least one resource within a duration from the start point to the end point.

The SBFD configuration information may include at least one of an index of a start slot of the UL subband, an index of a start symbol of the UL subband within the start slot, an index of an end slot of the UL subband, or an index of an end symbol of the UL subband within the end slot.

The SBFD configuration information may be included in time division duplexing (TDD)-UL-DL configuration common information, the TDD-UL-DL configuration common information may further include periodicity information of a UL/DL pattern, the DL duration and a UL duration may be configured based on the periodicity information of the UL/DL pattern, and the TDD-UL-DL configuration common information may be transmitted from the base station to the UE.

The method may further comprise: receiving, from the base station, a first message indicating activation of the UL subband configured by the SBFD configuration information, wherein the first message may be a medium access control (MAC) control element (CE) or downlink control information (DCI), and the UL communication is performed using the activated UL subband.

Based on the first message being received in a first DL duration, the UL subband configured in an earliest second DL duration or an earliest FL duration after the first DL duration in time domain may be activated.

Based on DL resources existing before the UL subband in time domain, the UL communication may be performed after preconfigured resources from the start point of the UL subband.

Based on DL resources existing before the UL subband in time domain, DL communication may not be performed in a duration until preconfigured resources preceding the start point of the UL subband.

A method of a base station, according to exemplary embodiments of the present disclosure for achieving the above-described objective, may comprise: generating subband full-duplex (SBFD) configuration information; transmitting the SBFD configuration information to a user equipment (UE); identifying a start point of an uplink (UL) subband in at least one duration among a downlink (DL) duration or a flexible (FL) duration in time domain, based on information included in the SBFD configuration information; and performing UL communication with the UE using the UL subband based on the start point.

The method may further comprise: identifying an end point of the UL subband in the at least one duration among the DL duration or the FL duration in time domain, based on the information included in the SBFD configuration information, wherein the UL communication is performed in at least one resource within a duration from the start point to the end point.

The SBFD configuration information may include at least one of an index of a start slot of the UL subband, an index of a start symbol of the UL subband within the start slot, an index of an end slot of the UL subband, or an index of an end symbol of the UL subband within the end slot.

The SBFD configuration information may be included in time division duplexing (TDD)-UL-DL configuration common information, the TDD-UL-DL configuration common information may further include periodicity information of a UL/DL pattern, the DL duration and a UL duration may be configured based on the periodicity information of the UL/DL pattern, and the TDD-UL-DL configuration common information may be transmitted from the base station to the UE.

The method may further comprise: transmitting, to the UE, a first message indicating activation of the UL subband configured by the SBFD configuration information, wherein the first message may be a medium access control (MAC) control element (CE) or downlink control information (DCI), and the UL communication is performed using the activated UL subband.

Based on the first message being transmitted in a first DL duration, the UL subband configured in an earliest second DL duration or an earliest FL duration after the first DL duration in time domain may be activated.

Based on DL resources existing before the UL subband in time domain, the UL communication may be performed after preconfigured resources from the start point of the UL subband.

Based on DL resources existing before the UL subband in time domain, DL communication may not be performed in a duration until preconfigured resources preceding the start point of the UL subband.

A user equipment (UE) according to exemplary embodiments of the present disclosure for achieving the above-described objective may comprise at least one processor, and the at least one processor may cause the UE to perform: receiving, from a base station, subband full-duplex (SBFD) configuration information; identifying a start point of an uplink (UL) subband in at least one duration among a downlink (DL) duration or a flexible (FL) duration in time domain, based on information included in the SBFD configuration information; and performing UL communication with the base station using the UL subband based on the start point.

The at least one processor may further cause the UE to perform: identifying an end point of the UL subband in the at least one duration among the DL duration or the FL duration in time domain, based on the information included in the SBFD configuration information, wherein the UL communication is performed in at least one resource within a duration from the start point to the end point.

The SBFD configuration information may include at least one of an index of a start slot of the UL subband, an index of a start symbol of the UL subband within the start slot, an index of an end slot of the UL subband, or an index of an end symbol of the UL subband within the end slot.

The SBFD configuration information may be included in time division duplexing (TDD)-UL-DL configuration common information, the TDD-UL-DL configuration common information may further include periodicity information of a UL/DL pattern, the DL duration and a UL duration may be configured based on the periodicity information of the UL/DL pattern, and the TDD-UL-DL configuration common information may be transmitted from the base station to the UE.

### [Advantageous Effects]

According to the present disclosure, a base station may transmit, to a terminal, information indicating a start point and/or an end point of a UL subband configured within a DL duration. The terminal may identify a location of the UL subband within the DL duration based on the information received from the base station, and may perform UL communication with the base station in the UL subband. According to the above-described operation, the location of the UL subband within the DL duration can be accurately indicated, and efficiency of SBFD operation can be improved. When transmission of a synchronization signal block (SSB) by the base station is performed within the UL subband, the terminal may perform UL transmission after a time gap from the SSB transmission within the UL subband. According to the above-described operation, a collision between UL transmission and DL transmission in the UL subband can be prevented, and efficiency of UL transmission in the UL subband can be improved.

### [Description of Drawings]

FIG. 1 is a conceptual diagram illustrating exemplary embodiments of a communication system.
FIG. 2 is a block diagram illustrating exemplary embodiments of a communication node constituting a communication system.
FIG. 3 is a block diagram illustrating exemplary embodiments of communication nodes performing communication.
FIG. 4A is a block diagram illustrating exemplary embodiments of a transmission path.
FIG. 4B is a block diagram illustrating exemplary embodiments of a reception path.
FIG. 5 is a conceptual diagram illustrating exemplary embodiments of a system frame in a communication system.
FIG. 6 is a conceptual diagram illustrating exemplary embodiments of a subframe in a communication system.
FIG. 7 is a conceptual diagram illustrating exemplary embodiments of a slot in a communication system.
FIG. 8 is a conceptual diagram illustrating exemplary embodiments of a time-frequency resource in a communication system.
FIG. 9 is a conceptual diagram illustrating an exemplary embodiment of resource configuration according to a TDD common configuration.
FIG. 10A is a conceptual diagram illustrating a first exemplary embodiment of a start point of a UL subband.
FIG. 10B is a conceptual diagram illustrating a second exemplary embodiment of a start point of a UL subband.
FIG. 11 is a conceptual diagram illustrating an exemplary embodiment of UL transmission within a UL subband.
FIG. 12 is a conceptual diagram illustrating a periodicity of a UL subband pattern and a duration of a UL subband.
FIG. 13A, FIG. 13B, and FIG. 13C are conceptual diagrams illustrating a validation rule of a UL subband.
FIG. 14A, FIG. 14B, FIG. 14C, FIG. 14D, and FIG. 14E are conceptual diagrams illustrating exemplary embodiments of configuration of a UL subband.
FIG. 15 is a sequence diagram illustrating a method of configuring a UL subband.

### [Mode for Invention]

Since the present disclosure may be variously modified and have several forms, specific exemplary embodiments will be shown in the accompanying drawings and be described in detail in the detailed description. It should be understood, however, that it is not intended to limit the present disclosure to the specific exemplary embodiments but, on the contrary, the present disclosure is to cover all modifications and alternatives falling within the spirit and scope of the present disclosure.

Relational terms such as first, second, and the like may be used for describing various elements, but the elements should not be limited by the terms. These terms are only used to distinguish one element from another. For example, a first component may be named a second component without departing from the scope of the present disclosure, and the second component may also be similarly named the first component. The term "and/or" means any one or a combination of a plurality of related and described items.

In the present disclosure, "at least one of A and B" may refer to "at least one of A or B" or "at least one of combinations of one or more of A and B". In addition, "one or more of A and B" may refer to "one or more of A or B" or "one or more of combinations of one or more of A and B".

In the present disclosure, '(re)transmission' may refer to 'transmission', 'retransmission', or 'transmission and retransmission', '(re)configuration' may refer to 'configuration', 'reconfiguration', or 'configuration and reconfiguration', '(re)connection' may refer to 'connection', 'reconnection', or 'connection and reconnection', and '(re)access' may refer to 'access', 're-access', or 'access and re-access'.

When it is mentioned that a certain component is "coupled with" or "connected with" another component, it should be understood that the certain component is directly "coupled with" or "connected with" to the other component or a further component may be disposed therebetween. In contrast, when it is mentioned that a certain component is "directly coupled with" or "directly connected with" another component, it will be understood that a further component is not disposed therebetween.

The terms used in the present disclosure are only used to describe specific exemplary embodiments, and are not intended to limit the present disclosure. The singular expression includes the plural expression unless the context clearly dictates otherwise. In the present disclosure, terms such as 'comprise' or 'have' are intended to designate that a feature, number, step, operation, component, part, or combination thereof described in the specification exists, but it should be understood that the terms do not preclude existence or addition of one or more features, numbers, steps, operations, components, parts, or combinations thereof.

Unless otherwise defined, all terms (including technical and scientific terms) used herein have the same meaning as commonly understood by one of ordinary skill in the art to which this disclosure belongs. Terms that are generally used and have been in dictionaries should be construed as having meanings matched with contextual meanings in the art. In this description, unless defined clearly, terms are not necessarily construed as having formal meanings.

Hereinafter, exemplary embodiments of the present disclosure will be described in detail with reference to the accompanying drawings. In describing the disclosure, to facilitate the entire understanding of the disclosure, like numbers refer to like elements throughout the description of the figures and the repetitive description thereof will be omitted. The operations according to the exemplary embodiments described explicitly in the present disclosure, as well as combinations of the exemplary embodiments, extensions of the exemplary embodiments, and/or variations of the exemplary embodiments, may be performed. Some operations may be omitted, and a sequence of operations may be altered.

Even when a method (e.g., transmission or reception of a signal) to be performed at a first communication node among communication nodes is described in exemplary embodiments, a corresponding second communication node may perform a method (e.g., reception or transmission of the signal) corresponding to the method performed at the first communication node. In other words, when an operation of a user equipment (UE) is described, a base station corresponding thereto may perform an operation corresponding to the operation of the UE. Conversely, when an operation of a base station is described, a corresponding UE may perform an operation corresponding to the operation of the base station.

The base station may be referred to by various terms such as NodeB, evolved NodeB, next generation node B (gNodeB), gNB, device, apparatus, node, communication node, base transceiver station (BTS), radio remote head (RRH), transmission reception point (TRP), radio unit (RU), road side unit (RSU), radio transceiver, access point, access node, and the like. The user equipment (UE) may be referred to by various terms such as terminal, device, apparatus, node, communication node, end node, access terminal, mobile terminal, station, subscriber station, mobile station, portable subscriber station, on-board unit (OBU), and the like.

In the present disclosure, signaling may be one or a combination of two or more of higher layer signaling, MAC signaling, and physical (PHY) signaling. A message used for higher layer signaling may be referred to as a 'higher layer message' or 'higher layer signaling message'. A message used for MAC signaling may be referred to as a 'MAC message' or 'MAC signaling message'. A message used for PHY signaling may be referred to as a 'PHY message' or 'PHY signaling message'. The higher layer signaling may refer to an operation of transmitting and receiving system information (e.g., master information block (MIB), system information block (SIB)) and/or an RRC message. The MAC signaling may refer to an operation of transmitting and receiving a MAC control element (CE). The PHY signaling may refer to an operation of transmitting and receiving control information (e.g., downlink control information (DCI), uplink control information (UCI), or sidelink control information (SCI)).

In the present disclosure, 'configuration of an operation (e.g., transmission operation)' may refer to signaling of configuration information (e.g., information elements, parameters) required for the operation and/or information indicating to perform the operation. 'configuration of information elements (e.g., parameters)' may refer to signaling of the information elements. In the present disclosure, 'signal and/or channel' may refer to signal, channel, or both signal and channel, and 'signal' may be used to mean 'signal and/or channel'.

A communication network to which exemplary embodiments are applied is not limited to that described below, and the exemplary embodiments may be applied to various communication networks (e.g., 4G communication networks, 5G communication networks, and/or 6G communication networks). Here, 'communication network' may be used interchangeably with a term 'communication system'.

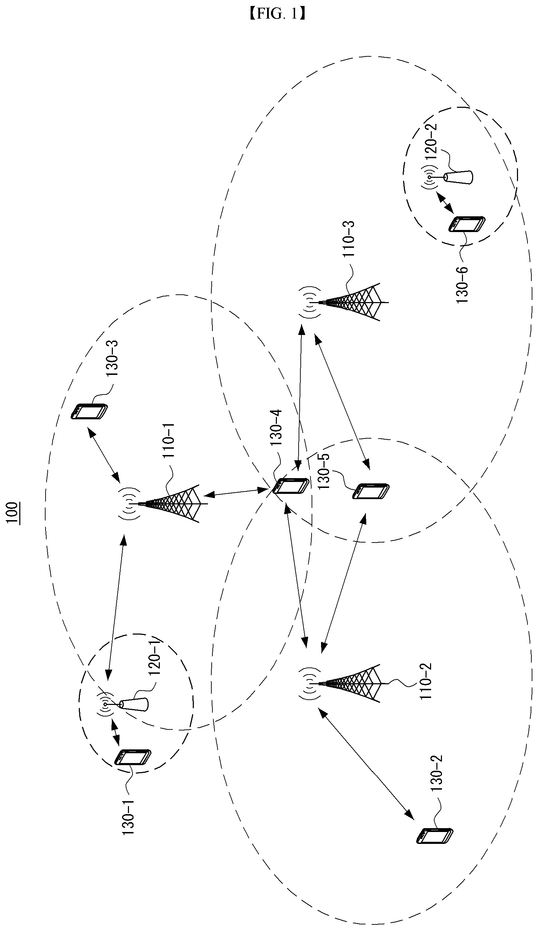

FIG. 1 is a conceptual diagram illustrating exemplary embodiments of a communication system.

As shown in FIG. 1, a communication system 100 may comprise a plurality of communication nodes 110-1, 110-2, 110-3, 120-1, 120-2, 130-1, 130-2, 130-3, 130-4, 130-5, and 130-6. In addition, the communication system 100 may further include a core network (e.g., a serving gateway (S-GW), a packet data network (PDN) gateway (P-GW), a mobility management entity (MME). When the communication system 100 is a 5G communication (e.g., NR system), the core network may include an access and mobility management function (AMF), a user plane function (UPF), a session management function (SMF), and the like.

The plurality of communication nodes 110 to 130 may support communication protocols (e.g., LTE communication protocol, LTE-A communication protocol, NR communication protocol, etc.) specified in 3^{rd} generation partnership project (3GPP) standards. The plurality of communication nodes 110 to 130 may support a code division multiple access (CDMA) technique, a wideband CDMA (WCDMA) technique, a time division multiple access (TDMA) technique, a frequency division multiple access (FDMA) technique, an orthogonal frequency division multiplexing (OFDM) technique, a filtered OFDM technique, a cyclic prefix OFDM (CP-OFDM) technique, a discrete Fourier transform spread OFDM (DFT-s-OFDM) technique, an orthogonal frequency division multiple access (OFDMA) technique, a single carrier FDMA (SC-FDMA) technique, a non-orthogonal multiple access (NOMA) technique, a generalized frequency division multiplexing (GFDM) technique, a filter bank multi-carrier (FBMC) technique, a universal filtered multi-carrier (UFMC) technique, a space division multiple access (SDMA) technique, or the like. Each of the plurality of communication nodes may have the following structure.

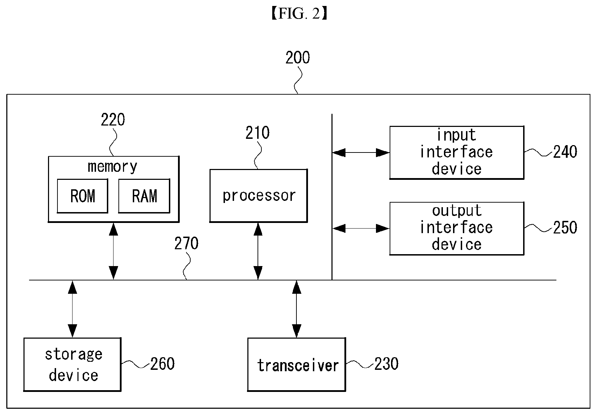

FIG. 2 is a block diagram illustrating exemplary embodiments of a communication node constituting a communication system.

As shown in FIG. 2, a communication node 200 may comprise at least one processor 210, a memory 220, and a transceiver 230 connected to the network for performing communications. Also, the communication node 200 may further comprise an input interface device 240, an output interface device 250, a storage device 260, and the like. Each component included in the communication node 200 may communicate with each other as connected through a bus 270.

The processor 210 may execute a program stored in at least one of the memory 220 and the storage device 260. The processor 210 may refer to a central processing unit (CPU), a graphics processing unit (GPU), or a dedicated processor on which methods in accordance with embodiments of the present disclosure are performed. Each of the memory 220 and the storage device 260 may be constituted by at least one of a volatile storage medium and a non-volatile storage medium. For example, the memory 220 may comprise at least one of read-only memory (ROM) and random access memory (RAM).

Referring again to FIG. 1, the communication system 100 may comprise a plurality of base stations 110-1, 110-2, 110-3, 120-1, and 120-2, and a plurality of terminals 130-1, 130-2, 130-3, 130-4, 130-5, and 130-6. The communication system 100 including the base stations 110-1, 110-2, 110-3, 120-1, and 120-2 and the terminals 130-1, 130-2, 130-3, 130-4, 130-5, and 130-6 may be referred to as an 'access network'. Each of the first base station 110-1, the second base station 110-2, and the third base station 110-3 may form a macro cell, and each of the fourth base station 120-1 and the fifth base station 120-2 may form a small cell. The fourth base station 120-1, the third terminal 130-3, and the fourth terminal 130-4 may belong to cell coverage of the first base station 110-1. Also, the second terminal 130-2, the fourth terminal 130-4, and the fifth terminal 130-5 may belong to cell coverage of the second base station 110-2. Also, the fifth base station 120-2, the fourth terminal 130-4, the fifth terminal 130-5, and the sixth terminal 130-6 may belong to cell coverage of the third base station 110-3. Also, the first terminal 130-1 may belong to cell coverage of the fourth base station 120-1, and the sixth terminal 130-6 may belong to cell coverage of the fifth base station 120-2.

Here, each of the plurality of base stations 110-1, 110-2, 110-3, 120-1, and 120-2 may refer to a Node-B, evolved Node-B (eNB), gNB, advanced base station (ABS), high reliability-base station (HR-BS), base transceiver station (BTS), radio base station, radio transceiver, access point, access node, radio access station (RAS), mobile multihop relay-base station (MMR-BS), relay station (RS), advanced relay station (ARS), high reliability-relay station (HR-RS), home NodeB (HNB), home eNodeB (HeNB), road side unit (RSU), radio remote head (RRH), transmission point (TP), transmission and reception point (TRP), or the like.

Each of the plurality of terminals 130-1, 130-2, 130-3, 130-4, 130-5, and 130-6 may refer to a user equipment (UE), terminal equipment (TE), advanced mobile station (AMS), high reliability-mobile station (HR-MS), terminal, access terminal, mobile terminal, station, subscriber station, mobile station, portable subscriber station, node, device, on-board unit (OBU), or the like.

Meanwhile, each of the plurality of base stations 110-1, 110-2, 110-3, 120-1, and 120-2 may operate in the same frequency band or in different frequency bands. The plurality of base stations 110-1, 110-2, 110-3, 120-1, and 120-2 may be connected to each other via an ideal backhaul or a non-ideal backhaul, and exchange information with each other via the ideal or non-ideal backhaul. Also, each of the plurality of base stations 110-1, 110-2, 110-3, 120-1, and 120-2 may be connected to the core network through the ideal or non-ideal backhaul. Each of the plurality of base stations 110-1, 110-2, 110-3, 120-1, and 120-2 may transmit a signal received from the core network to the corresponding terminal 130-1, 130-2, 130-3, 130-4, 130-5, or 130-6, and transmit a signal received from the corresponding terminal 130-1, 130-2, 130-3, 130-4, 130-5, or 130-6 to the core network.

In addition, each of the plurality of base stations 110-1, 110-2, 110-3, 120-1, and 120-2 may support multi-input multi-output (MIMO) transmission (e.g., a single-user MIMO (SU-MIMO), multiuser MIMO (MU-MIMO), massive MIMO, or the like), coordinated multipoint (CoMP) transmission, carrier aggregation (CA) transmission, transmission in an unlicensed band, sidelink communication (e.g., device-to-device (D2D) communication, proximity services (ProSe)), Internet of Things (IoT) communication, dual connectivity (DC), and/or the like. Here, each of the plurality of terminals 130-1, 130-2, 130-3, 130-4, 130-5, and 130-6 may perform operations corresponding to the operations of the plurality of base stations 110-1, 110-2, 110-3, 120-1, and 120-2, and operations supported by the plurality of base stations 110-1, 110-2, 110-3, 120-1, and 120-2. For example, the second base station 110-2 may transmit a signal to the fourth terminal 130-4 in the SU-MIMO manner, and the fourth terminal 130-4 may receive the signal from the second base station 110-2 in the SU-MIMO manner. Alternatively, the second base station 110-2 may transmit a signal to the fourth terminal 130-4 and fifth terminal 130-5 in the MU-MIMO manner, and the fourth terminal 130-4 and fifth terminal 130-5 may receive the signal from the second base station 110-2 in the MU-MIMO manner.

The first base station 110-1, the second base station 110-2, and the third base station 110-3 may transmit a signal to the fourth terminal 130-4 in the CoMP transmission manner, and the fourth terminal 130-4 may receive the signal from the first base station 110-1, the second base station 110-2, and the third base station 110-3 in the CoMP manner. Also, each of the plurality of base stations 110-1, 110-2, 110-3, 120-1, and 120-2 may exchange signals with the corresponding terminals 130-1, 130-2, 130-3, 130-4, 130-5, or 130-6 which belongs to its cell coverage in the CA manner. Each of the base stations 110-1, 110-2, and 110-3 may control sidelink communications between the fourth terminal 130-4 and the fifth terminal 130-5, and thus the fourth terminal 130-4 and the fifth terminal 130-5 may perform the sidelink communications under control of the second base station 110-2 and the third base station 110-3, respectively.

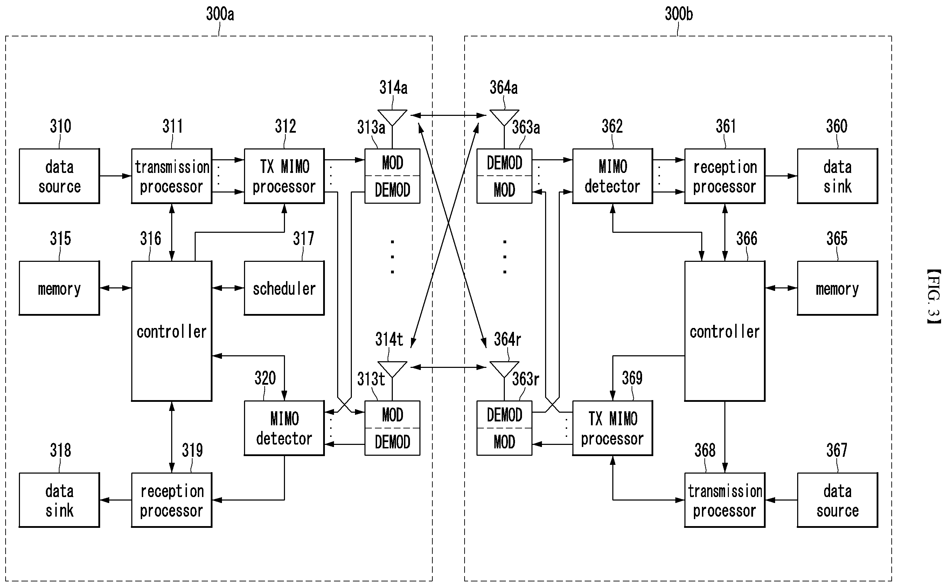

Meanwhile, communication nodes that perform communications in the communication network may be configured as follows. A communication node shown in FIG. 3 may be a specific exemplary embodiment of the communication node shown in FIG. 2.

FIG. 3 is a block diagram illustrating exemplary embodiments of communication nodes performing communication.

As shown in FIG. 3, each of a first communication node 300a and a second communication node 300b may be a base station or UE. The first communication node 300a may transmit a signal to the second communication node 300b. A transmission processor 311 included in the first communication node 300a may receive data (e.g., data unit) from a data source 310. The transmission processor 311 may receive control information from a controller 316. The control information may include at least one of system information, RRC configuration information (e.g., information configured by RRC signaling), MAC control information (e.g., MAC CE), or PHY control information (e.g., DCI, SCI).

The transmission processor 311 may generate data symbol(s) by performing processing operations (e.g., encoding operation, symbol mapping operation, etc.) on the data. The transmission processor 311 may generate control symbol(s) by performing processing operations (e.g., encoding operation, symbol mapping operation, etc.) on the control information. In addition, the transmission processor 311 may generate synchronization/reference symbol(s) for synchronization signals and/or reference signals.

A Tx MIMO processor 312 may perform spatial processing operations (e.g., precoding operations) on the data symbol(s), control symbol(s), and/or synchronization/reference symbol(s). An output (e.g., symbol stream) of the Tx MIMO processor 312 may be provided to modulators (MODs) included in transceivers 313a to 313t. The modulator may generate modulation symbols by performing processing operations on the symbol stream, and may generate signals by performing additional processing operations (e.g., analog conversion operation, amplification operation, filtering operation, up-conversion operation, etc.) on the modulation symbols. The signals generated by the modulators of the transceivers 313a to 313t may be transmitted through antennas 314a to 314t.

The signals transmitted by the first communication node 300a may be received at antennas 364a to 364r of the second communication node 300b. The signals received at the antennas 364a to 364r may be provided to demodulators (DEMODs) included in transceivers 363a to 363r. The demodulator (DEMOD) may obtain samples by performing processing operations (e.g., filtering operation, amplification operation, down-conversion operation, digital conversion operation, etc.) on the signals. The demodulator may perform additional processing operations on the samples to obtain symbols. A MIMO detector 362 may perform MIMO detection operations on the symbols. A reception processor 361 may perform processing operations (e.g., de-interleaving operation, decoding operation, etc.) on the symbols. An output of the reception processor 361 may be provided to a data sink 360 and a controller 366. For example, the data may be provided to the data sink 360 and the control information may be provided to the controller 366.

On the other hand, the second communication node 300b may transmit signals to the first communication node 300a. A transmission processor 368 included in the second communication node 300b may receive data (e.g., data unit) from a data source 367 and perform processing operations on the data to generate data symbol(s). The transmission processor 368 may receive control information from the controller 366 and perform processing operations on the control information to generate control symbol(s). In addition, the transmission processor 368 may generate reference symbol(s) by performing processing operations on reference signals.

A Tx MIMO processor 369 may perform spatial processing operations (e.g., precoding operations) on the data symbol(s), control symbol(s), and/or reference symbol(s). An output (e.g., symbol stream) of the Tx MIMO processor 369 may be provided to modulators (MODs) included in the transceivers 363a to 363t. The modulator may generate modulation symbols by performing processing operations on the symbol stream, and may generate signals by performing additional processing operations (e.g., analog conversion operation, amplification operation, filtering operation, up-conversion operation) on the modulation symbols. The signals generated by the modulators of the transceivers 363a to 363t may be transmitted through the antennas 364a to 364t.

The signals transmitted by the second communication node 300b may be received at the antennas 314a to 314r of the first communication node 300a. The signals received at the antennas 314a to 314r may be provided to demodulators (DEMODs) included in the transceivers 313a to 313r. The demodulator may obtain samples by performing processing operations (e.g., filtering operation, amplification operation, down-conversion operation, digital conversion operation) on the signals. The demodulator may perform additional processing operations on the samples to obtain symbols. A MIMO detector 320 may perform MIMO detection operations on the symbols. The reception processor 319 may perform processing operations (e.g., de-interleaving operation, decoding operation, etc.) on the symbols. An output of the reception processor 319 may be provided to a data sink 318 and the controller 316. For example, the data may be provided to the data sink 318 and the control information may be provided to the controller 316.

Memories 315 and 365 may store the data, control information, and/or program codes. A scheduler 317 may perform scheduling operations for communication. The processors 311, 312, 319, 361, 368, and 369 and the controllers 316 and 366 shown in FIG. 3 may be the processor 210 shown in FIG. 2, and may be used to perform methods described in the present disclosure.

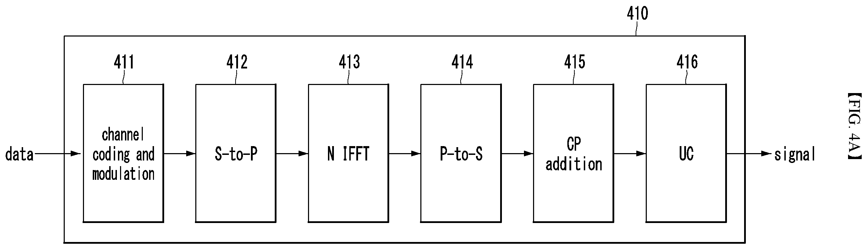

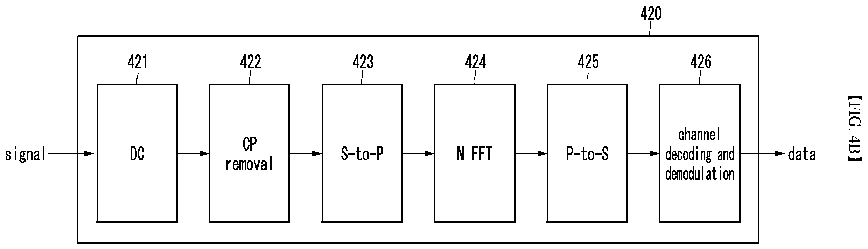

FIG. 4A is a block diagram illustrating exemplary embodiments of a transmission path, and FIG. 4B is a block diagram illustrating exemplary embodiments of a reception path.

As shown in FIGS. 4A and 4B, a transmission path 410 may be implemented in a communication node that transmits signals, and a reception path 420 may be implemented in a communication node that receives signals. The transmission path 410 may include a channel coding and modulation block 411, a serial-to-parallel (S-to-P) block 412, an N-point inverse fast Fourier transform (N-point IFFT) block 413, a parallel-to-serial (P-to-S) block 414, a cyclic prefix (CP) addition block 415, and an up-converter (UC) 416. The reception path 420 may include a down-converter (DC) 421, a CP removal block 422, an S-to-P block 423, an N-point FFT block 424, a P-to-S block 425, and a channel decoding and demodulation block 426. Here, N may be a natural number.

In the transmission path 410, information bits may be input to the channel coding and modulation block 411. The channel coding and modulation block 411 may perform a coding operation (e.g., low-density parity check (LDPC) coding operation, polar coding operation, etc.) and a modulation operation (e.g., Quadrature Phase Shift Keying (QPSK), Quadrature Amplitude Modulation (QAM), etc.) on the information bits. An output of the channel coding and modulation block 411 may be a sequence of modulation symbols.

The S-to-P block 412 may convert frequency domain modulation symbols into parallel symbol streams to generate N parallel symbol streams. N may be the IFFT size or the FFT size. The N-point IFFT block 413 may generate time domain signals by performing an IFFT operation on the N parallel symbol streams. The P-to-S block 414 may convert the output (e.g., parallel signals) of the N-point IFFT block 413 to serial signals to generate the serial signals.

The CP addition block 415 may insert a CP into the signals. The UC 416 may up-convert a frequency of the output of the CP addition block 415 to a radio frequency (RF). Further, the output of the CP addition block 415 may be filtered in baseband before the up-conversion.

The signal transmitted from the transmission path 410 may be input to the reception path 420. Operations in the reception path 420 may be reverse operations for the operations in the transmission path 410. The DC 421 may down-convert a frequency of the received signals to a baseband frequency. The CP removal block 422 may remove a CP from the signals. The output of the CP removal block 422 may be serial signals. The S-to-P block 423 may convert the serial signals into parallel signals. The N-point FFT block 424 may generate N parallel signals by performing an FFT algorithm. The P-to-S block 425 may convert the parallel signals into a sequence of modulation symbols. The channel decoding and demodulation block 426 may perform a demodulation operation on the modulation symbols and may restore data by performing a decoding operation on a result of the demodulation operation.

In FIGS. 4A and 4B, discrete Fourier transform (DFT) and inverse DFT (IDFT) may be used instead of FFT and IFFT. Each of the blocks (e.g., components) in FIGS. 4A and 4B may be implemented by at least one of hardware, software, or firmware. For example, some blocks in FIGS. 4A and 4B may be implemented by software, and other blocks may be implemented by hardware or a combination of hardware and software. In FIGS. 4A and 4B, one block may be subdivided into a plurality of blocks, a plurality of blocks may be integrated into one block, some blocks may be omitted, and blocks supporting other functions may be added.

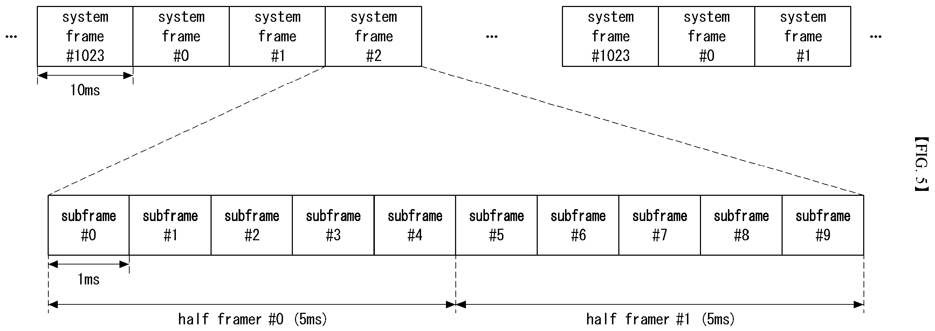

FIG. 5 is a conceptual diagram illustrating exemplary embodiments of a system frame in a communication system.

As shown in FIG. 5, time resources in the communication system may be divided on a frame basis. For example, system frames of the communication system may be configured continuously in the time domain. The length of the system frame may be 10 milliseconds (ms). A system frame number (SFN) may be set to one of #0 to #1023. In this case, 1024 system frames may be repeated in the time domain of the communication system. For example, an SFN of a system frame after the system frame #1023 may be #0.

One system frame may include two half frames. The length of one half frame may be 5 ms. A half frame located at a starting region of the system frame may be referred to as 'half frame #0', and a half frame located at an ending region of the system frame may be referred to as 'half frame #1'. One system frame may include 10 subframes. The length of one subframe may be 1 ms. 10 subframes within one system frame may be referred to as subframes #0-#9.

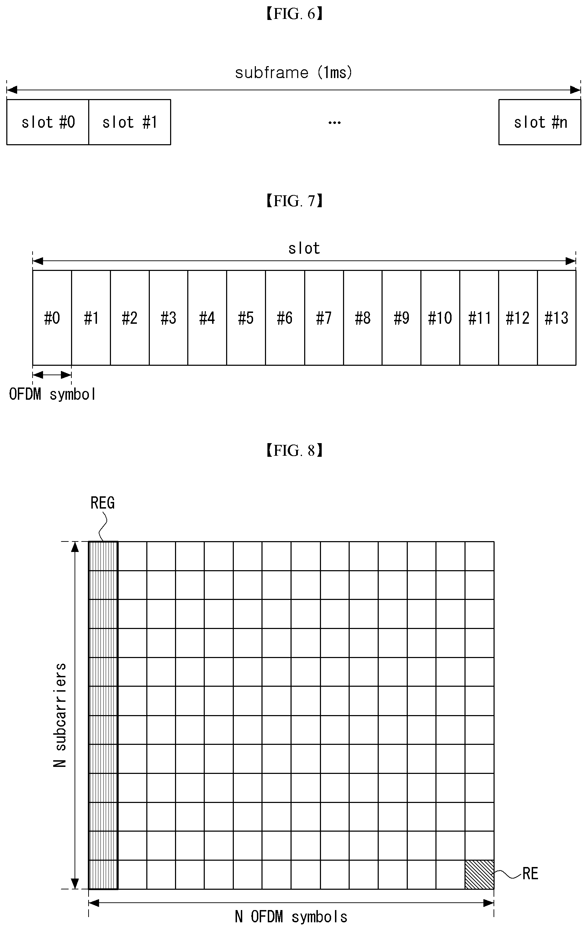

FIG. 6 is a conceptual diagram illustrating exemplary embodiments of a subframe in a communication system.

As shown in FIG. 6, one subframe may include n slots, and n may be a natural number. Accordingly, one subframe may consist of one or more slots.

FIG. 7 is a conceptual diagram illustrating exemplary embodiments of a slot in a communication system.

As shown in FIG. 7, one slot may include one or more symbols. For example, one slot shown in FIG. 7 may include 14 symbols. The length of a slot may vary according to the number of symbols included in a slot and the length of symbol. Alternatively, the length of a slot may vary according to a numerology.

The numerology applied to physical signals and channels in a communication system may be variable. The numerology may be adjusted to meet various technical requirements of the communication system. In a communication system where a cyclic prefix (CP)-based OFDM waveform technology is applied, the numerology may include a subcarrier spacing and a CP length (or CP type). Table 1 may illustrate a first exemplary embodiment of a method for configuring numerologies for a CP-OFDM-based communication system. Depending on a frequency band in which the communication system operates, at least some of the numerologies in Table 1 may be supported. Additionally, the communication system may support numerologies not listed in Table 1.

**[Table 1]**

| Subcarrier spacing | 15 kHz | 30 kHz | 60 kHz | 120 kHz | 240 kHz | 480 kHz |
|---|---|---|---|---|---|---|
| OFDM symbol length [µs] | 66.7 | 33.3 | 16.7 | 8.3 | 4.2 | 2.1 |
| CP length [µs] | 4.76 | 2.38 | 1.19 | 0.60 | 0.30 | 0.15 |
| Number of OFDM symbols within 1ms | 14 | 28 | 56 | 112 | 224 | 448 |

When a subcarrier spacing is 15 kHz (e.g., µ = 0), the length of a slot may be 1 ms. In this case, one system frame may include 10 slots. When a subcarrier spacing is 30 kHz (e.g., µ = 1), the length of a slot may be 0.5 ms. In this case, one system frame may include 20 slots.

When a subcarrier spacing is 60 kHz (e.g., µ = 2), the length of a slot may be 0.25 ms. In this case, one system frame may include 40 slots. When a subcarrier spacing is 120 kHz (e.g., µ = 3), the length of a slot may be 0.125 ms. In this case, one system frame may include 80 slots. When a subcarrier spacing is 240 kHz (e.g., µ = 4), the length of a slot may be 0.0625 ms. In this case, one system frame may include 160 slots.

The symbol may be configured as a downlink (DL) symbol, a flexible (FL) symbol, or an uplink (UL) symbol. A slot composed of only DL symbols may be referred to as a 'DL slot', a slot composed of only FL symbols may be referred to as a 'FL slot', and a slot composed of only UL symbols may be referred to as a 'UL slot'.

A slot format may be semi-statically configured through higher-layer signaling (e.g., RRC signaling). Information indicating a semi-static slot format may be included in system information, and the semi-static slot format may be configured cell-specifically. Additionally, a semi-static slot format may be further configured for each terminal through terminal-specific higher-layer signaling (e.g., RRC signaling). Flexible symbols in the cell-specific slot format may be overridden to be downlink symbols or uplink symbols through terminal-specific higher-layer signaling. Furthermore, a slot format may be dynamically indicated through physical layer signaling (e.g., slot format indicator (SFI) included in DCI). The semi-statically configured slot format may be overridden by the dynamically indicated slot format. For example, flexible symbols configured semi-statically may be overridden to be downlink symbols or uplink symbols by the SFI.

Reference signals may include Channel State Information-Reference Signal (CSI-RS), Sounding Reference Signal (SRS), Demodulation-Reference Signal (DM-RS), and Phase Tracking-Reference Signal (PT-RS). Channels may include Physical Broadcast Channel (PBCH), Physical Downlink Control Channel (PDCCH), Physical Downlink Shared Channel (PDSCH), Physical Uplink Control Channel (PUCCH), Physical Uplink Shared Channel (PUSCH), Physical Sidelink Control Channel (PSCCH), and Physical Sidelink Shared Channel (PSSCH). In the present disclosure, a control channel may refer to PDCCH, PUCCH, or PSCCH, and a data channel may refer to PDSCH, PUSCH, or PSSCH.

FIG. 8 is a conceptual diagram illustrating exemplary embodiments of a time-frequency resource in a communication system.

As shown in FIG. 8, a resource composed of one OFDM symbol on the time axis and one subcarrier on the frequency axis may be defined as a 'resource element (RE)'. A resource composed of one OFDM symbol on the time axis and K subcarriers on the frequency axis may be defined as a 'resource element group (REG)'. The REG may include K REs. The REG may be used as a basic unit of resource allocation in the frequency domain. K may be a natural number. For example, K may be 12. N may be a natural number. In the slot shown in FIG. 7, N may be 14. N OFDM symbols may be used as a basic unit of resource allocation in the time domain.

In the present disclosure, an RB may refer to a common RB (CRB). Alternatively, an RB may refer to a physical RB (PRB) or a virtual RB (VRB). In a communication system, a CRB may refer to an RB that constitutes a set of contiguous RBs (e.g., a common RB grid) based on a reference frequency (e.g., point A). A carrier and/or bandwidth part may be mapped onto the common RB grid. That is, a carrier and/or bandwidth part may be configured with CRB(s). The RBs or CRBs that constitute a bandwidth part may be referred to as PRBs, and a CRB index may be appropriately converted to a PRB index within the bandwidth part.

Downlink data may be transmitted through a PDSCH. A base station may transmit configuration information (e.g., scheduling information) for the PDSCH to a terminal through a PDCCH. The terminal may obtain the configuration information of the PDSCH by receiving the PDCCH (e.g., Downlink Control Information (DCI)). For example, the configuration information of the PDSCH may include a Modulation and Coding Scheme (MCS) used for transmission/reception of the PDSCH, time resource information of the PDSCH, frequency resource information of the PDSCH, and feedback resource information for the PDSCH. The PDSCH may refer to a radio resource where the downlink data is transmitted and received. Alternatively, the PDSCH may refer to the downlink data itself. The PDCCH may refer to a radio resource where the downlink control information (e.g., DCI) is transmitted and received. Alternatively, the PDCCH may refer to the downlink control information itself.

The terminal may perform a monitoring operation for the PDCCH to receive the PDSCH transmitted from the base station. The base station may notify the terminal of configuration information for the PDCCH monitoring operation using a higher-layer message (e.g., Radio Resource Control (RRC) message). The configuration information for the PDCCH monitoring operation may include Control Resource Set (CORESET) information and search space information.

The CORESET information may include PDCCH DMRS information, PDCCH precoding information, and PDCCH occasion information, and the like. A PDCCH DMRS may be a DMRS used for demodulating a PDCCH. A PDCCH occasion refers to a region where a PDCCH may exist, meaning it is a region where DCI can be transmitted. A PDCCH occasion may also be referred to as a PDCCH candidate. The PDCCH occasion information may include time resource information and frequency resource information for the PDCCH occasion. In the time domain, the length of the PDCCH occasion may be indicated in symbol units. In the frequency domain, the size of the PDCCH occasion can be indicated in RB units (e.g., in PRB units or CRB units).

The search space information may include a CORESET identifier (ID) associated with a search space, a periodicity of PDCCH monitoring, and/or an offset of PDCCH monitoring. The periodicity and offset of PDCCH monitoring may each be indicated in slot units. Additionally, the search space information may further include an index of a symbol where the PDCCH monitoring operation starts.

The base station may configure Bandwidth Part(s) (BWP(s)) for downlink communication. The BWP(s) may be configured differently for each terminal. The base station may notify the terminal of BWP configuration information using higher-layer signaling. The higher-layer signaling may refer to a transmission operation of system information and/or a transmission operation of RRC message(s). The number of BWPs configured for a single terminal may be one or more. The terminal may receive the BWP configuration information from the base station and identify the configured BWP(s) based on the received configuration information. When multiple BWPs are configured for downlink communication, the base station may activate one or more BWPs from among the multiple BWPs. The base station may transmit configuration information of the activated BWP(s) to the terminal using at least one of higher-layer signaling, Medium Access Control (MAC) Control Element (CE), or DCI. The base station may perform downlink communication using the activated BWP(s). The terminal may identify the activated BWP(s) by receiving the configuration information from the base station and perform downlink reception operations on the activated BWP(s).

Meanwhile, a communication system (e.g., an NR communication system, a 5G communication system, or a 6G communication system) may support usage scenarios such as enhanced Mobile BroadBand (eMBB), Ultra Reliable Low Latency Communication (URLLC), and massive Machine Type Communication (mMTC). A communication system (e.g., a communication network) may support a subband full-duplex (SBFD) operation.

A communication system may support a time division duplexing (TDD) scheme. In a communication system supporting the TDD scheme (hereinafter, referred to as a "TDD communication system"), downlink (DL) symbol(s) and uplink (UL) symbol(s) may be configured in different time resources within one carrier. DL symbols and UL symbols may be associated with coverage and/or latency. In the TDD communication system, a base station may use resources more efficiently than in a frequency division duplexing (FDD) scheme in consideration of various use cases. A resource scheduling operation of a base station in the TDD communication system may be important. For an enhanced TDD operation, an SBFD operation (e.g., an SBFD scheme) may be supported. When the SBFD operation is supported in the TDD communication system, DL communication (e.g., a transmission and reception operation of a DL signal) and UL communication (e.g., a transmission and reception operation of a UL signal) may be simultaneously performed within the same time resource. For example, within the same time resource, some subbands may be DL subbands, and other subbands may be UL subbands and/or FL subbands. In the present disclosure, a DL signal may be interpreted as a DL signal, a DL channel, or "a DL signal and a DL channel" depending on context. In the present disclosure, a UL signal may be interpreted as a UL signal, a UL channel, or "a UL signal and a UL channel" depending on context.

A symbol to which the SBFD operation is applied may be referred to as an SBFD symbol. A symbol to which the SBFD operation is not applied may be referred to as an N(non)-SBFD symbol. The N-SBFD symbol may be a DL symbol, a UL symbol, or an FL symbol. In the SBFD symbol, a terminal may perform DL communication and UL communication. In other words, the terminal may perform a full-duplex operation in the SBFD symbol. In the N-SBFD symbol, the terminal may perform one of DL communication and UL communication. In other words, the terminal may perform a half-duplex operation in the N-SBFD symbol. The SBFD symbol may be a symbol including a subband in which the SBFD operation is performed. A subband for SBFD may be referred to or interpreted as a UL subband. The UL subband may exist (e.g., be configured) in a symbol in which a synchronization signal block (SSB) is transmitted.

Resources for the SBFD operation (e.g., time resources and/or frequency resources) may be configured in a semi-static manner. In other words, a configuration for SBFD resources may be a semi-static configuration. "A configuration of SBFD resources being a semi-static configuration" may mean "SBFD resources being configured by semi-static signaling (e.g., system information or an RRC message)". In the present disclosure, SBFD resources may refer to time resources and/or frequency resources for the SBFD operation. A UL subband for SBFD may be an SBFD resource. Alternatively, SBFD resources may be configured in a dynamic manner. "A configuration of SBFD resources being a dynamic configuration" may mean "SBFD resources being configured by dynamic signaling (e.g., MAC CE, DCI, SCI)".

SBFD resources (e.g., a UL subband and/or an SBFD symbol) may be configured within DL resources and/or flexible (FL) resources configured by TDD-UL-DL configuration common information (e.g., *TDD-UL-DL-ConfigCommon*). A transition point from an N-SBFD symbol to an SBFD symbol in the time domain may be limited to one. A transition point from an SBFD symbol to an N-SBFD symbol in the time domain may be limited to one. Regarding resource configuration of a subband for SBFD, it may be preferable for a terminal to recognize resource configuration information of the subband for SBFD in advance.

The TDD-UL-DL configuration common information may be used to configure, in the time domain, a pattern (e.g., *TDD-UL-DL-Pattern*) for DL resources and/or UL resources of the TDD communication system. A pattern for DL resources and/or UL resources may be referred to as a UL/DL pattern. The UL/DL pattern may be changed according to an environment of the communication system (e.g., the TDD communication system). Up to two UL/DL patterns may be configured for a terminal. The TDD-UL-DL configuration common information may be a cell-specific parameter (e.g., cell-specific configuration information). A base station may change a configuration (e.g., a transmission direction, a type) for symbol(s) on a per-terminal basis with reference to a specific slot within a preconfigured UL/DL pattern. A slot in which a symbol configuration (e.g., a symbol direction, a symbol type) is changeable may be a slot configured as an FL resource by the TDD-UL-DL configuration common information. A symbol direction (e.g., a symbol transmission direction) and/or a symbol type may be DL, UL, or FL. RRC signaling used to change a configuration of an FL slot (e.g., an FL resource) may be TDD-UL-DL configuration dedicated information (e.g., *TDD-UL-DL-ConfigDedicated*). Table 2 may be TDD-UL-DL configuration common information, and Table 3 and Table 4 may be TDD-UL-DL configuration dedicated information.

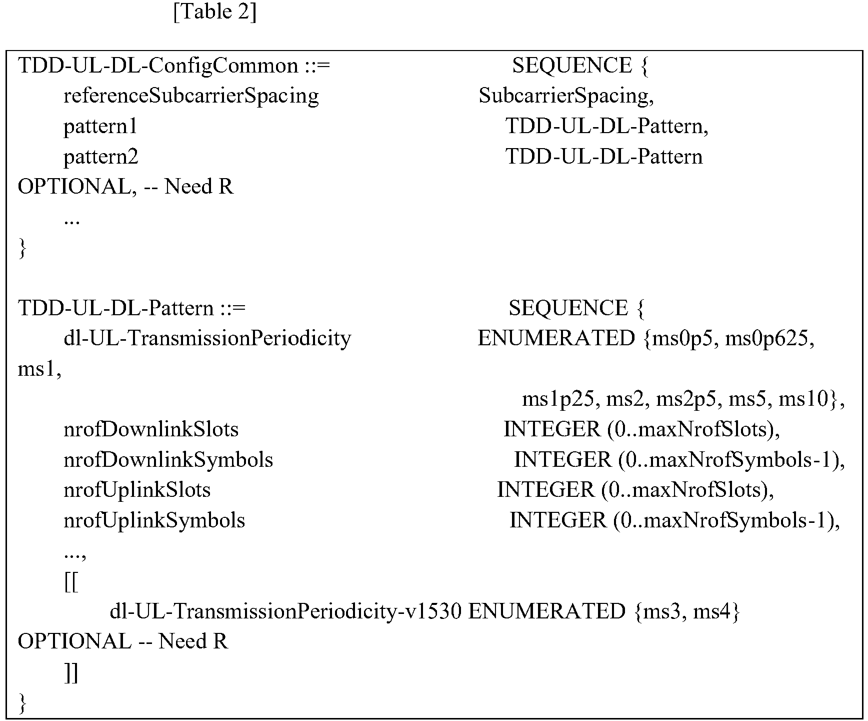

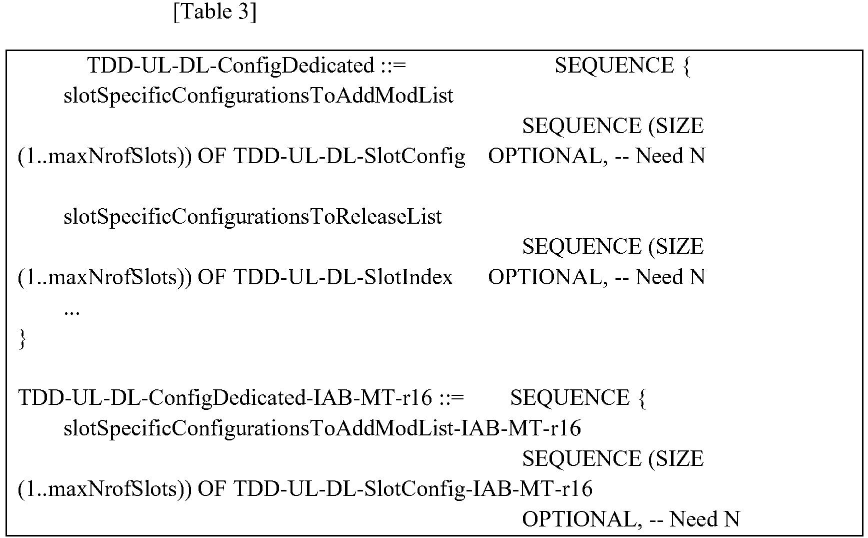

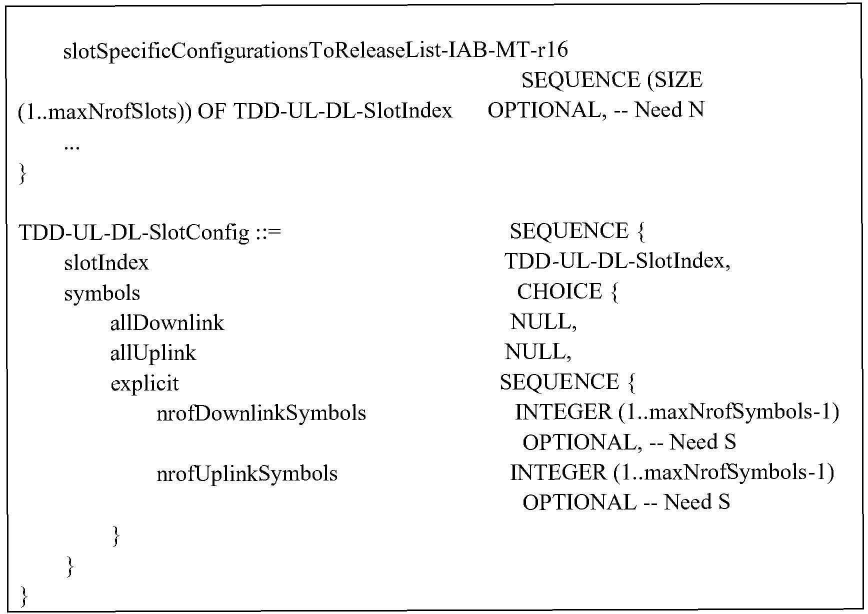

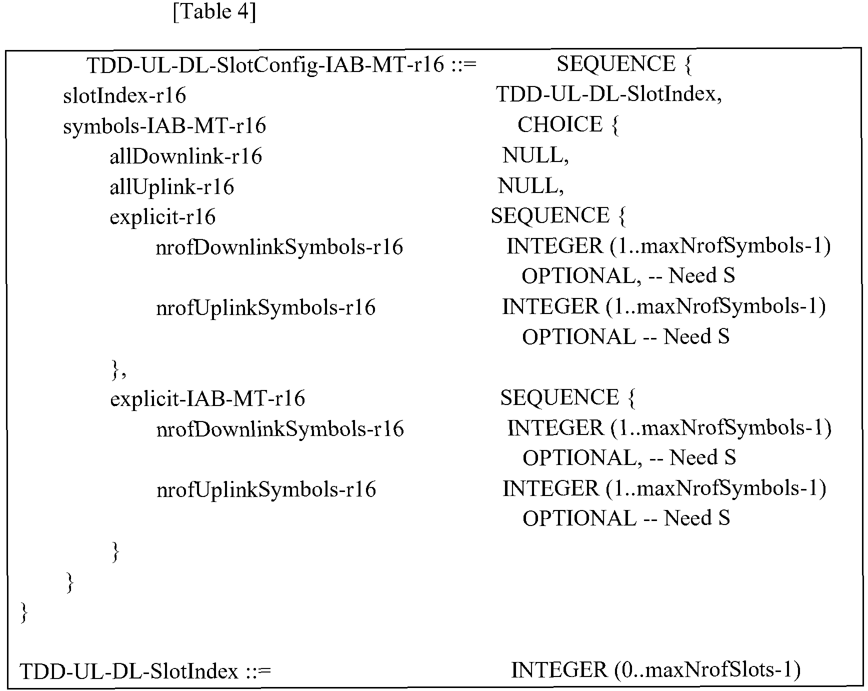

A UL/DL pattern configured by the TDD-UL-DL configuration common information may be repeated according to a specific periodicity (e.g., *dl-UL-TransmissionPeriodicity*). A front region of a time duration to which the UL/DL pattern is applied may be configured as DL resources. A rear region of the time duration to which the UL/DL pattern is applied may be configured as UL resources. Resources that are not configured as DL resources or UL resources in the time duration to which the UL/DL pattern is applied may be configured as FL resources. The periodicity of the UL/DL pattern may vary depending on a reference numerology. For switching (e.g., transition) from DL resources (e.g., DL symbols/slots) to UL resources (e.g., UL symbols/slots), a guard time (e.g., a guard gap) may be required. Since a propagation delay of a DL signal causes interference to UL resources, the guard time may be required for switching from DL resources to UL resources. A separate guard time may not be required for switching from UL resources to DL resources. Since a UL signal is transmitted based on a timing advance command (TAC) indicated by the base station, a guard time for switching from UL resources to DL resources may not be required.

To support the SBFD operation, an SBFD resource configuration may be required. In the present disclosure, methods of configuring time resources and/or frequency resources for a subband for SBFD (e.g., a UL subband) will be described. TDD-UL-DL configuration common information (e.g., *TDD-UL-DL-ConfigCommon*) may be referred to as "TDD common" or "TDD common information". TDD-UL-DL configuration dedicated information (e.g., *TDD-UL-DL-ConfigDedicated*) may be referred to as "TDD dedicated" or "TDD dedicated information". A UL subband may refer to a subband for SBFD. DL symbol(s) and/or DL slot(s) may be referred to as a DL region (or DL resources). UL symbol(s) and/or UL slot(s) may be referred to as a UL region (or UL resources). FL symbol(s) and/or FL slot(s) may be referred to as an FL region (or FL resources).

### Time-domain configuration of SBFD resources (e.g., a UL subband or an SBFD subband)

For a terminal in an RRC connected state, time-domain location(s) of an SBFD subband may be configured within a period (hereinafter, referred to as an "SBFD period"). When at least one UL/DL pattern is configured, an SBFD periodicity may be determined based on Option 1 below or Option 2 below.
- Option 1: The SBFD periodicity may be the same as a UL/DL pattern periodicity indicated by *dl-UL-TransmissionPeriodicity* included in TDD-UL-DL configuration common information.
- Option 2: The SBFD periodicity may be an integer multiple of a UL/DL pattern periodicity indicated by *dl-UL-TransmissionPeriodicity* included in TDD-UL-DL configuration common information.

One slot may include SBFD symbol(s) and N-SBFD symbol(s). When one UL/DL pattern is configured, the SBFD symbols may be continuously configured within a UL/DL pattern period. When two UL/DL patterns are configured and SBFD symbols are configured for one of the two UL/DL patterns, the SBFD symbols may be continuously configured within a UL/DL pattern period. When two UL/DL patterns are configured and SBFD symbols are configured for both UL/DL patterns, the SBFD symbols may be continuously configured within each UL/DL pattern period.

SBFD symbols may be configured within DL symbols and/or FL symbols configured by TDD common information. The SBFD symbols may start at any symbol within a slot. The SBFD symbols may end at any symbol within a slot. A reference subcarrier spacing (SCS) indicated by the TDD common information may be used as a reference SCS (e.g., a reference SCS for the SBFD symbols).

For SBFD symbols configured within DL symbols and/or FL symbols configured by TDD common information, for transmission and reception of an SBFD-aware terminal, UL transmissions within UL-usable physical resource blocks (PRBs) may be allowed, DL receptions within DL-usable PRBs may be allowed, UL transmissions outside the UL-usable PRBs may not be allowed, and DL receptions outside the DL-usable PRBs may not be allowed. The above restrictions may not be applied to cross link interference (CLI) measurement.

For transmission and reception of an SBFD-aware terminal in an SBFD symbol, the following options for determining a link direction (e.g., transmission and/or reception) may be considered.
- Option 1: The terminal may determine a link direction based on configured transmission, configured reception, scheduled transmission, scheduled reception, and/or collision handling.
- Option 2: A link direction may be explicitly indicated by the base station.

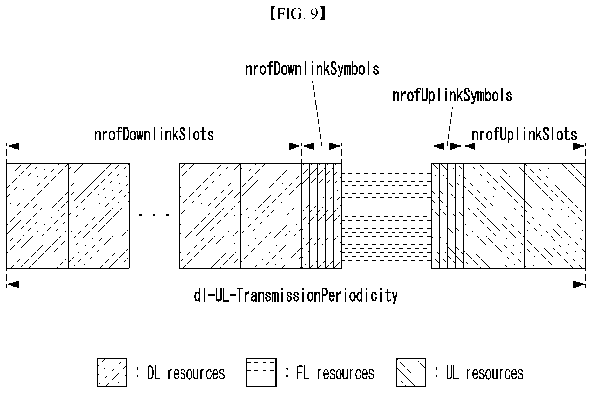

FIG. 9 is a conceptual diagram illustrating an exemplary embodiment of resource configuration according to a TDD common configuration.

As shown in FIG. 9, DL resources, FL resources, and UL resources may be configured within a period indicated by *dl-UL-TransmissionPeriodicity*. *nrofDownlinkSlots* may indicate the number of DL slots. *nrofDownlinkSymbols* may indicate the number of DL symbols. *nrofUplinkSlots* may indicate the number of UL slots. nrofUplinkSymbols may indicate the number of UL symbols. Resources that are not configured as DL resources and UL resources within a period indicated by *dl-UL-TransmissionPeriodicity* may be FL resources. A UL subband (e.g., an SBFD subband) may exist (e.g., be configured) within DL symbol(s) and/or FL symbol(s). In the time domain, SBFD symbol(s) may be configured based on a combination of the following parameters.
- **Parameter 1**: a symbol offset and/or a slot offset for a UL subband (e.g., an SBFD subband)

A symbol offset (e.g., Parameter 1) may be an offset for a start symbol of a UL subband configured within DL resources and/or FL resources indicated by a TDD common configuration. A slot offset (e.g., Parameter 1) may be an offset for a start slot of a UL subband configured within DL resources and/or FL resources indicated by a TDD common configuration. The base station may explicitly indicate the symbol/slot offset (e.g., Parameter 1) to the terminal. The terminal may identify the symbol/slot offset indicated by the base station. When the symbol offset is an offset from a slot boundary (e.g., when a reference point of the symbol offset is the slot boundary), the symbol offset may be interpreted as a symbol index. When the slot offset is an offset from a frame (or subframe) boundary (e.g., when a reference point of the slot offset is the frame (or subframe) boundary), the slot offset may be interpreted as a slot index.

In a configuration step of a UL subband, an offset (e.g., a symbol/slot offset) for a point at which the UL subband starts (e.g., a start point) from a specific reference point may be indicated to the terminal. For example, the base station may transmit configuration information for the UL subband including the symbol/slot offset (e.g., Parameter 1) to the terminal. The terminal may receive the configuration information for the UL subband from the base station, and may identify the symbol/slot offset included in the configuration information for the UL subband. The reference point for the offset may be a slot or a last symbol in which a channel (e.g., PDSCH or PDCCH) including an SBFD operation command is transmitted. Alternatively, the reference point may be a start symbol (e.g., a first symbol) of a UL/DL pattern closest to the signaling (e.g., a channel including the SBFD operation command) in the time domain. Alternatively, the reference point may be a slot or a last symbol in which a channel (e.g., PDSCH or PDCCH) including scheduling information for UL transmission in the SBFD subband is transmitted. Alternatively, the reference point may be a start symbol (e.g., a first symbol) of a UL/DL pattern temporally closest to the signaling (e.g., a channel including scheduling information for UL transmission in the SBFD subband) in the time domain.

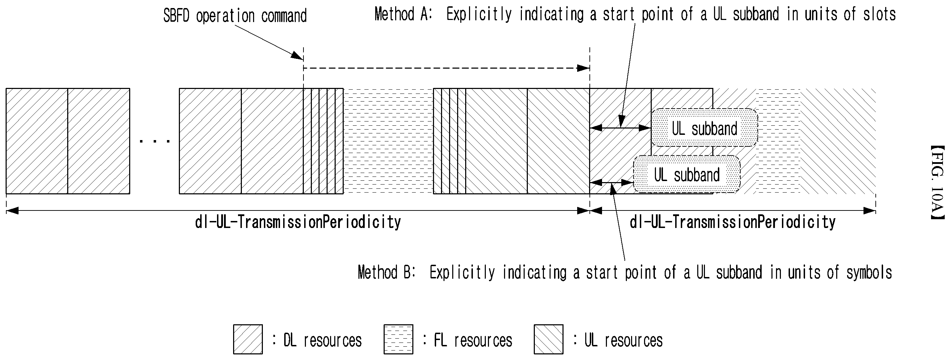

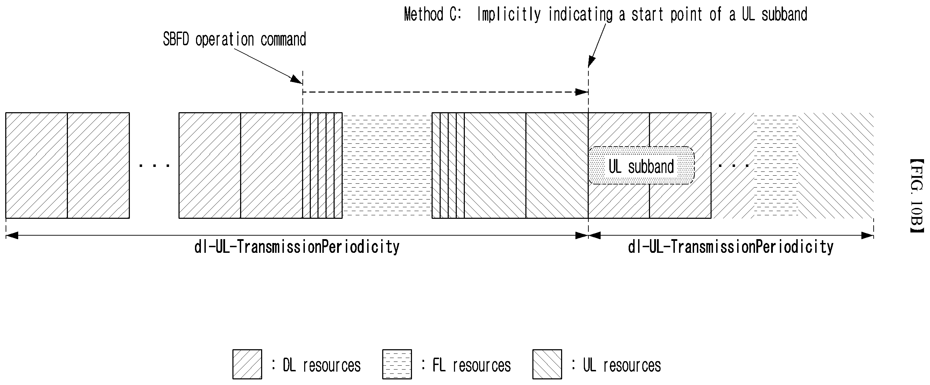

FIG. 10A is a conceptual diagram illustrating a first exemplary embodiment of a start point of a UL subband, and FIG. 10B is a conceptual diagram illustrating a second exemplary embodiment of a start point of a UL subband.

As shown in FIG. 10A and FIG. 10B, a start point of a UL subband may be explicitly or implicitly indicated. In the exemplary embodiment of FIG. 10A, a start point of a UL subband may be explicitly indicated. In the exemplary embodiment of FIG. 10B, a start point of a UL subband may be implicitly indicated. The base station may transmit an SBFD operation command indicating activation of an SBFD operation to the terminal. The terminal may receive the SBFD operation command from the base station, and may determine that the SBFD operation is activated based on the SBFD operation command. The SBFD operation command may be included in an RRC message, MAC CE, or DCI. The SBFD operation command may be transmitted in a certain UL/DL pattern period, and a start point of a UL/DL pattern period (e.g., an earliest UL/DL pattern period) after the certain UL/DL pattern period may be a reference point for an offset indicating the start point of the UL subband. The UL subband may start after the offset from the reference point.

When configuring resources for the UL subband, the base station may transmit information on the reference point and/or information on the offset to the terminal. The terminal may receive the information on the reference point and/or the information on the offset from the base station. In Method A of FIG. 10A, a slot offset for the UL subband may be configured for the terminal, and the terminal may determine that the UL subband starts at a position corresponding to the slot offset from the start point of the UL/DL pattern period. In Method B of FIG. 10A, a symbol offset for the UL subband may be configured for the terminal, and the terminal may determine that the UL subband starts at a position corresponding to the symbol offset from the start point of the UL/DL pattern period. Alternatively, the start point of the UL subband may be indicated using both a slot offset and a symbol offset. The start point of the UL subband configured based on Method A may be the same as or different from the start point of the UL subband configured based on Method B. An end point of the UL subband configured based on Method A may be the same as or different from an end point of the UL subband configured based on Method B. In other words, since the configuration units of the offsets (e.g., slots and symbols) are different in Method A and Method B, the start point and/or the end point of the UL subband configured based on Method A may be different from the start point and/or the end point of the UL subband configured based on Method B.

When configuring resources for the UL subband, the base station may transmit information on the start point and/or the end point of the UL subband to the terminal. The terminal may receive the information on the start point and/or the end point of the UL subband from the base station. The information on the start point and/or the end point of the UL subband may be included in configuration information for the UL subband.

In the exemplary embodiment of FIG. 10B (e.g., Method C), the terminal may determine that the UL subband starts at the start point of the UL/DL pattern period. The start point of the UL subband may be implicitly configured. In other words, a slot offset and/or a symbol offset indicating the start point of the UL subband may not be configured. Only a reference point associated with the start point of the UL subband may be configured for the terminal. For example, when an SBFD operation command is received without a configuration for the start point of the UL subband (e.g., the SBFD subband), the terminal may determine, as the start point of the UL subband, the earliest symbol (e.g., the earliest DL symbol) after the SBFD operation command or a start symbol (e.g., a first DL symbol) of the earliest UL/DL pattern occurring after the SBFD operation command. Alternatively, the terminal may determine, as the start point of the UL subband, a point offset by X symbol(s) or X slot(s) from a start point (e.g., a start symbol or a start slot) of the earliest UL/DL pattern occurring after the SBFD operation command. X may be a natural number.

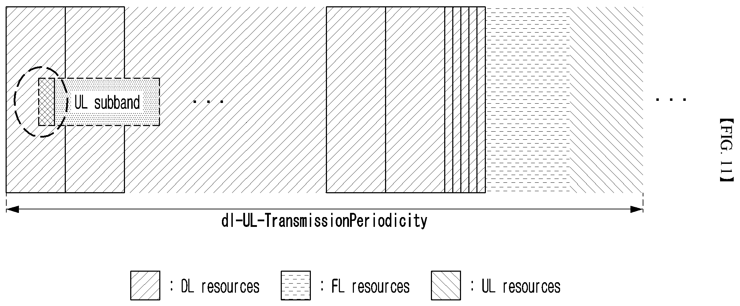

When DL resources exist before SBFD symbol(s) (e.g., when DL resources exist before the UL subband), the terminal may not expect transmission in the SBFD symbol(s) (e.g., UL transmission in the UL subband) during a specific time duration (e.g., symbol(s)). The specific time duration may be configured for the terminal by the base station. SBFD transmission may not be expected during the specific time duration in order to avoid inter-symbol interference caused by a propagation delay. In other words, when switching from DL resources to UL resources occurs, the terminal may expect UL transmission after N symbol(s) from a starting UL resource (e.g., a starting SBFD symbol). N may be a natural number. A value of N may be configured for the terminal by the base station. The above-described operation may be illustrated in FIG. 11 below.

FIG. 11 is a conceptual diagram illustrating an exemplary embodiment of UL transmission within a UL subband.

As shown in FIG. 11, when DL symbol(s) exist before a start symbol of a UL subband, the terminal may not expect to perform UL transmission during preconfigured UL resources (e.g., N UL symbol(s) and/or N UL slot(s)) from the start symbol of the UL subband (e.g., a starting SBFD symbol). The base station may not expect that the terminal performs UL transmission in the preconfigured UL resources. The preconfigured UL resources (e.g., N UL symbol(s) and/or N UL slot(s)) may be defined in technical specifications. N may be a natural number. Alternatively, the base station may indicate (e.g., configure) information on the preconfigured UL resources (e.g., N UL symbol(s) and/or N UL slot(s)) to the terminal. The terminal may identify the preconfigured UL resources based on the indication of the base station. Alternatively, the terminal may transmit information on the preconfigured UL resources (e.g., N UL symbol(s) and/or N UL slot(s)) to the base station. The base station may receive the information on the preconfigured UL resources from the terminal. The information on the preconfigured UL resources may be included in a UE capability report.

Alternatively, when DL symbol(s) exist before the start symbol of the UL subband, the terminal may not expect to receive DL transmission during preconfigured DL resources (e.g., N DL symbol(s) and/or N DL slot(s)) before the start symbol of the UL subband (e.g., the SBFD start symbol). The base station may not expect to perform DL transmission in the preconfigured DL resources. The preconfigured DL resources (e.g., N DL symbol(s) and/or N DL slot(s)) may be defined in technical specifications. N may be a natural number. Alternatively, the base station may indicate (e.g., configure) information on the preconfigured DL resources (e.g., N DL symbol(s) and/or N DL slot(s)) to the terminal. The terminal may identify the preconfigured DL resources based on the indication of the base station. Alternatively, the terminal may transmit information on the preconfigured DL resources (e.g., N DL symbol(s) and/or N DL slot(s)) to the base station. The base station may receive the information on the preconfigured DL resources from the terminal. The information on the preconfigured DL resources may be included in a UE capability report.
- **Parameter 2**: a periodicity (e.g., a pattern repetition periodicity) of a UL subband pattern (e.g., an SBFD subband pattern)
- **Parameter 3**: a duration of a single UL subband
- **Parameter 4**: an offset between a plurality of UL subbands configured within one UL subband pattern

According to Parameter 1, the terminal may configure a UL subband based on a symbol offset or a slot offset within DL resources (e.g., a consecutive DL region) configured based on a TDD common configuration. Variables (e.g., parameters) additionally considered for configuration of the UL subband in the time domain may include a periodicity of the UL subband pattern (e.g., Parameter 2) and/or a duration of a single UL subband (e.g., Parameter 3). The periodicity of the UL subband pattern may refer to an interval at which a single UL subband pattern or a plurality of UL subband patterns (e.g., UL subband pattern 1 and UL subband pattern 2) is repeated. The duration of the single UL subband may refer to a time duration during which the single UL subband continues in the time domain. The duration of the single UL subband may be expressed as M symbols and/or N slots. Each of M and N may be a natural number. Each of M and N may be defined in technical specifications. Alternatively, the base station may signal information on each of M and N to the terminal. The terminal may identify a value of each of M and N through signaling from the base station. Alternatively, the terminal may transmit information on each of M and N to the base station. The base station may receive the information on each of M and N from the terminal. The information on each of M and N may be included in a UE capability report.

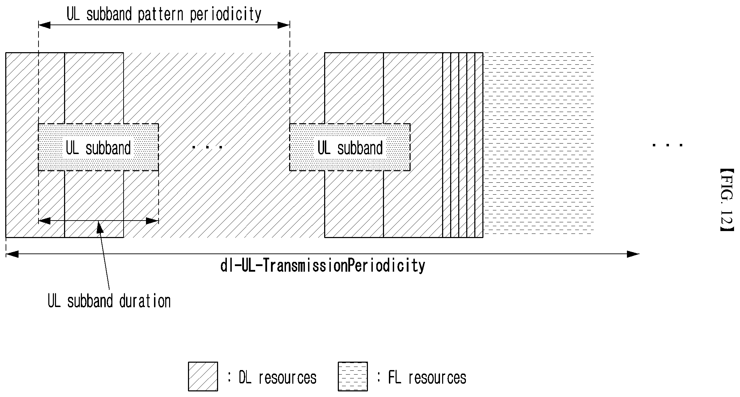

FIG. 12 is a conceptual diagram illustrating a periodicity of a UL subband pattern and a duration of a UL subband.

As shown in FIG. 12, one or more UL subbands may be configured within a UL subband pattern. When one UL subband is configured within the UL subband pattern, a periodicity of the UL subband pattern may be interpreted as a periodicity of the UL subband. A duration of the UL subband may be configured in units of symbols and/or in units of slots. The number of UL subbands included in the UL subband pattern may be determined by a repetition factor. An interval (e.g., offset) between a plurality of UL subbands within one UL subband pattern may be configured as a single value (e.g., the same value). An interval between a plurality of UL subbands within one UL subband pattern may be configured depending on a value of the repetition factor (e.g., the number of UL subbands included in the UL subband pattern). For example, when a repetition factor of UL subband pattern 1 is different from a repetition factor of UL subband pattern 2, an interval between a plurality of UL subbands within UL subband pattern 1 may be different from an interval between a plurality of UL subbands within UL subband pattern 2. The base station may transmit an interval (e.g., Parameter 4) between a plurality of UL subbands within the UL subband pattern to the terminal through signaling. The terminal may identify the interval between the plurality of UL subbands within the UL subband pattern based on the signaling from the base station.

A duration of each of the plurality of UL subbands may be configured as a single value (e.g., the same value). Alternatively, each of the plurality of UL subbands may have different durations in the time domain. A duration of each of the plurality of UL subbands may be configured according to a value of the repetition factor (e.g., the number of UL subbands included in the UL subband pattern). The base station may transmit information on the duration of the UL subband corresponding to each repetition factor to the terminal. The terminal may receive the information on the duration of the UL subband corresponding to each repetition factor from the base station. For example, a duration of UL subband 1 corresponding to repetition factor 1 may be different from a duration of UL subband 2 corresponding to repetition factor 2. Based on the above-described operation, UL subbands within the UL subband pattern may be individually configured.

The UL subband may be repeatedly configured until a last symbol of a region in which the UL subband is allowed to exist. The region in which the UL subband is allowed to exist may be a DL region and/or an FL region. A UL region or "a UL region and an FL region" may be configured as a region in which the UL subband is not allowed to exist.

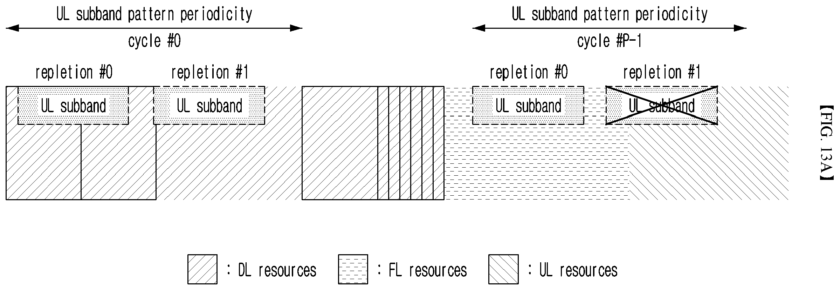

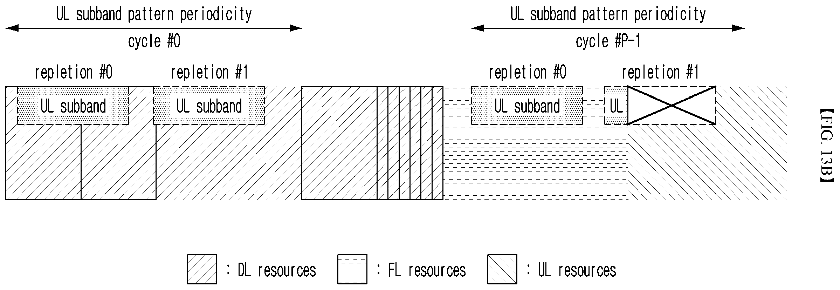

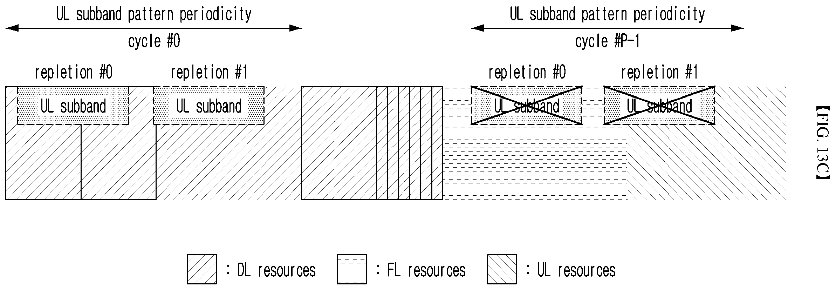

FIG. 13A, FIG. 13B, and FIG. 13C are conceptual diagrams illustrating a validation rule of a UL subband.

As shown in FIG. 13A, FIG. 13B, and FIG. 13C, a plurality of UL subbands may be configured within one UL subband pattern. One or more UL subbands may be configured based on a periodicity with reference to a start point. The UL subbands may be repeated throughout a region in which the UL subbands are allowed to exist. In the exemplary embodiments of FIG. 13A, FIG. 13B, and FIG. 13C, periodicities of the UL subband patterns may be the same. A certain UL subband may partially overlap or fully overlap a UL region. In this case, the certain UL subband overlapping the UL region may be used or may not be used for UL communication based on a validation rule. The validation rule may be required to determine whether UL communication is performed in the UL subband overlapping the UL region.

In the exemplary embodiment of FIG. 13A, when a UL subband overlapping a UL region exists within one UL subband pattern (e.g., one period of the UL subband pattern), the entire UL subband overlapping the UL region may not be used for UL communication, and a UL subband not overlapping the UL region within the one UL subband pattern may be used for UL communication.

In the exemplary embodiment of FIG. 13B, when a UL subband overlapping a UL region exists within one UL subband pattern (e.g., one period of the UL subband pattern), a part of the UL subband overlapping the UL region may not be used for UL communication, and the remaining part of the UL subband may be used for UL communication. In other words, part A of the UL subband may overlap the UL region, whereas the remaining part B of the UL subband may not overlap the UL region. In this case, part A may be used for UL communication, and part B may not be used for UL communication. In addition, when UL subband 1 not overlapping the UL region and UL subband 2 partially overlapping the UL region exist within one UL subband pattern, UL subband 1 may be used for UL communication, and based on the above-described method, only a part of UL subband 2 that does not overlap the UL region may be used for UL communication.

In the exemplary embodiment of FIG. 13C, when a UL subband overlapping a UL region exists within one UL subband pattern (e.g., one period of the UL subband pattern), all UL subbands within the one UL subband pattern may not be used for UL communication.

The exemplary embodiment illustrated in FIG. 13A may correspond to validation rule A, the exemplary embodiment illustrated in FIG. 13B may correspond to validation rule B, and the exemplary embodiment illustrated in FIG. 13C may correspond to validation rule C. The base station may inform the terminal of a validation rule to be used among a plurality of validation rules through signaling. The terminal may identify the validation rule to be used based on the signaling from the base station. Alternatively, the terminal may inform the base station of one validation rule used among the plurality of validation rules through signaling. The base station may identify the one validation rule used through the signaling from the terminal. The base station and/or the terminal may identify a valid UL subband based on the validation rule. A UL subband pattern and/or a periodicity of the UL subband pattern may be associated with a number of transitions from DL resources to UL resources and/or a number of transitions from UL resources to DL resources.

Consecutive SBFD symbols among valid SBFD symbols configured in a DL region and/or an FL region may be referred to as a candidate SBFD occasion. The valid SBFD symbols may be SBFD symbols satisfying a validation rule among SBFD symbols belonging to an SBFD subband (e.g., a UL subband). The base station and/or the terminal may expect to perform an SBFD operation (e.g., DL communication and/or UL communication according to the SBFD operation) in the candidate SBFD occasion.

### - Proposal #1

In Proposal #1, the base station may configure resources for a UL subband in the time domain based on one parameter among the above-described parameters (e.g., Parameters 1 to 4) or a combination of a plurality of parameters among the above-described parameters. The terminal and/or the base station may expect to perform an SBFD operation (e.g., DL communication and/or UL communication according to the SBFD operation) in all candidate SBFD occasions.

### - Proposal #2

In Proposal #2, the base station may configure resources for a UL subband in the time domain based on one parameter among the above-described parameters (e.g., Parameters 1 to 4) or a combination of a plurality of parameters among the above-described parameters. The terminal and/or the base station may expect to perform an SBFD operation (e.g., DL communication and/or UL communication according to the SBFD operation) in some candidate SBFD occasion(s) among all candidate SBFD occasions.

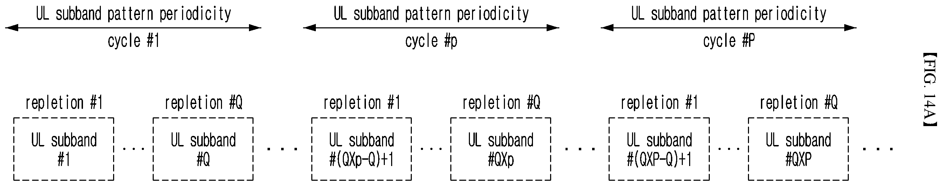

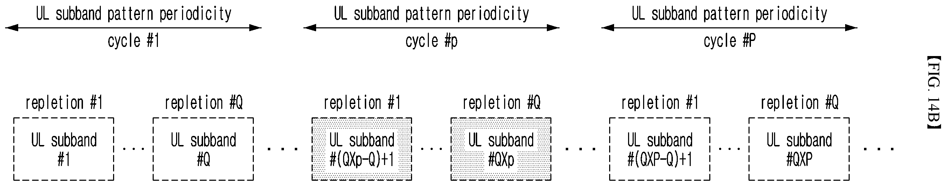

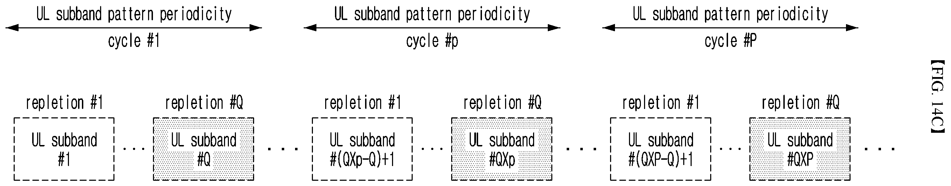

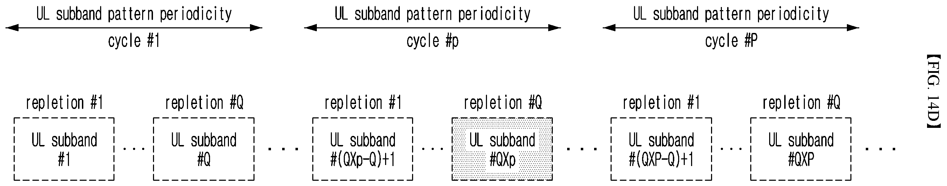

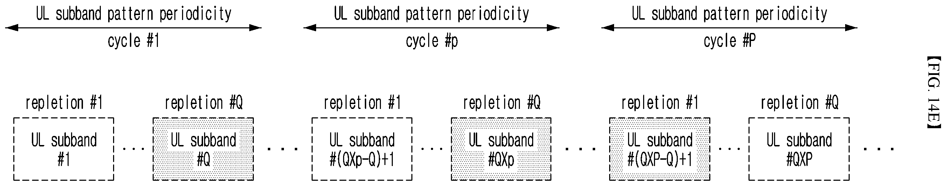

FIG. 14A, FIG. 14B, FIG. 14C, FIG. 14D, and FIG. 14E are conceptual diagrams illustrating exemplary embodiments of configuration of a UL subband.

As shown in FIG. 14A to FIG. 14E, a plurality of UL subbands may be configured within one UL subband pattern. For example, one UL subband pattern may include Q UL subbands. Q may be a natural number. In the exemplary embodiments of FIG. 14A to FIG. 14E, the UL subbands (e.g., all UL subbands) may be candidate UL subbands. In the exemplary embodiments of FIG. 14A to FIG. 14E, periodicities of the UL subband patterns may be the same. The UL subband pattern may be repeated for P cycles. P may be a natural number. As a value of P and/or Q increases, signaling overhead for configuration of the UL subband may increase. Among the UL subbands, UL subband(s) in which communication according to the SBFD operation is performed may be configured (e.g., indicated) based on the following proposals.
- **Proposal #2-1**: on/off of a UL subband may be configured in units of cycles. The exemplary embodiment of FIG. 14B may be configuration of UL subbands based on Proposal #2-1.

The base station may indicate specific cycle(s) for a UL subband pattern to the terminal through signaling. The specific cycle(s) indicated by the base station may be cycle(s) in which the SBFD operation is performed. The terminal may identify the specific cycle(s) indicated by the base station through signaling. The terminal and/or the base station may expect to perform the SBFD operation in the specific cycle(s) indicated by the base station. When the base station indicates cycle #p, the terminal and/or the base station may expect that the SBFD operation is performed in cycle #p. p may be a natural number. Information indicating the specific cycle(s) may be a bitmap. A cycle index may be mapped one-to-one to a bit in the bitmap. Cycle indexes may be mapped to bits in the bitmap in descending order or ascending order. The base station may turn on or turn off one or more cycles using the bitmap. A cycle in an on state may be a cycle in which the SBFD operation is performed. A cycle in an off state may be a cycle in which the SBFD operation is not performed. A cycle index in a decimal form may be converted into a value in a binary form. The base station may inform the terminal that one or more SBFD occasions corresponding to a single cycle index are used for the SBFD operation. The terminal may determine that the one or more SBFD occasions corresponding to the single cycle index are used for the SBFD operation based on an indication (e.g., configuration) from the base station.
- **Proposal #2-2**: on/off of a UL subband may be configured in units of repetitions. The exemplary embodiment of FIG. 14C may be configuration of UL subbands based on Proposal #2-2.

Based on Proposal #2-2, candidate SBFD occasions belonging to a single UL subband pattern or a single cycle may be independently configured. Locations of SBFD occasions used for the SBFD operation may be identical across UL subband patterns. A signaling scheme for Proposal #2-2 may be the same as or similar to the above-described signaling scheme for Proposal #2-1. For example, the base station may transmit information indicating 'on' for repetition Q of a UL subband to the terminal through signaling. The terminal may determine that repetition Q of the UL subband is in an on state through the signaling from the base station. The terminal and/or the base station may determine that the SBFD operation is performed in the UL subband (e.g., an SBFD occasion) associated with repetition Q in the on state.
- **Proposal #2-3**: on/off of a UL subband may be configured as a combination of a cycle unit and a repetition unit. The exemplary embodiment of FIG. 14D may be configuration of UL subbands based on Proposal #2-3.

Proposal #2-3 may be a combination of Proposal #2-1 and Proposal #2-2. SBFD occasion(s) in which the SBFD operation is performed may be configured (e.g., indicated) based on a hierarchical structure. For example, an environment in which four cycles for a UL subband exist and two repetitions exist in each cycle may be assumed. In the environment, the base station may transmit on/off information for cycles (e.g., 0100) and on/off information for repetitions (e.g., 10) to the terminal through signaling. The terminal may receive the on/off information for cycles (e.g., 0100) and the on/off information for repetitions (e.g., 10) through the signaling from the base station. In the on/off information, a bit value of 0 may indicate that a corresponding cycle or repetition is in an off state. In the on/off information, a bit value of 1 may indicate that a corresponding cycle or repetition is in an on state. Based on the signaling, the terminal and/or the base station may determine that the SBFD operation is performed in an SBFD occasion (e.g., a candidate SBFD occasion) associated with a first repetition in a second cycle.
- **Proposal #2-4**: one or more SBFD occasions in which the SBFD operation is performed may be indicated by explicit signaling considering all candidate SBFD occasions. The exemplary embodiment of FIG. 14E may be configuration of UL subbands based on Proposal #2-4.

A bitmap for all candidate SBFD occasions may be configured. All candidate SBFD occasions may be indexed in temporal order based on a starting candidate SBFD occasion. A bitmap for indexes of all candidate SBFD occasions may be configured. When P cycles exist and Q repetitions exist in each cycle, a size of the bitmap may be P×Q bits. A bit set to 0 in the bitmap may indicate that an SBFD occasion associated with the bit is in an off state. A bit set to 1 in the bitmap may indicate that an SBFD occasion associated with the bit is in an on state. The base station may configure a bitmap indicating one or more SBFD occasions in which the SBFD operation is performed, and may transmit the bitmap to the terminal through signaling. The terminal may receive the bitmap through the signaling from the base station. The terminal and/or the base station may determine that the SBFD operation is performed in one or more SBFD occasions indicated by the bitmap. Signaling overhead according to Proposal #2-4 may be greater than signaling overhead according to other proposals. When a number of cycles and/or a number of repetitions is small, Proposal #2-4 may be efficient.

### - Proposal #3

Independently of a TDD common configuration and/or a TDD dedicated configuration, the base station may configure SBFD resources (e.g., an SBFD subband, a UL subband) in the time domain using at least one parameter among Parameters 1 to 4. The terminal may identify the SBFD resources indicated by the base station. The terminal may identify SBFD resource(s) satisfying a validation rule among all SBFD resources indicated by the base station, and may expect performance of an SBFD operation (e.g., UL communication and/or DL communication according to the SBFD operation) in the identified SBFD resource(s). The base station may expect that the SBFD operation is performed in SBFD resource(s) satisfying the validation rule among all SBFD resources. The SBFD resource(s) satisfying the validation rule among all SBFD resources may be SBFD resource(s) belonging to a DL region and/or an FL region configured by the TDD common configuration and/or the TDD dedicated configuration. Alternatively, based on Proposal #2, the base station may configure (e.g., indicate) a subset of SBFD resources in which the SBFD operation is performed among all SBFD resources for the terminal. The terminal may identify the SBFD resources in which the SBFD operation is performed based on configuration (e.g., indication) from the base station.

### - Proposal #4

The maximum number of UL/DL patterns supported by the base station may be two. For example, the base station may configure UL/DL pattern 1 for the terminal. Alternatively, the base station may configure UL/DL pattern 1 and UL/DL pattern 2 for the terminal. UL/DL pattern 2 may start from an end time of UL/DL pattern 1. UL/DL pattern 1 and UL/DL pattern 2 may have different periodicities. Configuration of UL/DL resources in UL/DL pattern 1 may be different from configuration of UL/DL resources in UL/DL pattern 2. In terms of flexibility, the base station may configure a UL subband pattern corresponding to each UL/DL pattern. Parameter(s) and/or signaling for configuration of the UL subband pattern may be the same as parameter(s) and/or signaling for configuration of the UL/DL pattern. To prevent an increase in signaling overhead, a rule for the time domain of the UL subband applied to UL/DL pattern 1 may be identically applied to UL/DL pattern 2 (e.g., a UL subband applied to UL/DL pattern 2).

### - Proposal #5

An FL resource (e.g., an FL symbol and/or an FL slot) configured by a TDD common configuration may be reconfigured (e.g., overridden) as a UL resource or a DL resource by a TDD dedicated configuration. A configuration (e.g., a rule, a validation rule) for a candidate SBFD occasion may be basically applied to a DL resource configured by the TDD common configuration, and the configuration for the candidate SBFD occasion may be extended to a resource changed from an FL resource to a DL resource by the TDD dedicated configuration (e.g., a reconfigured resource). The operation may be applied when a priority of a UL subband is higher than a priority of a DL resource (e.g., a normal DL resource). Whether a UL subband is configured in the resource changed from the FL resource to the DL resource may depend on a type (e.g., DL, UL, or FL) of a resource preceding the FL resource. For example, when a symbol before the FL resource is an SBFD symbol, for continuity of SBFD transmission, an SBFD symbol may be configured (e.g., allocated) in the resource changed from the FL resource to the DL resource. When the symbol before the FL resource is not an SBFD symbol, the SBFD symbol may be restricted from being configured in the resource changed from the FL resource to the DL resource. Whether the SBFD operation is performed in the FL resource may be determined according to one or more predefined conditions.

### Frequency-domain configuration of SBFD resources (e.g., a UL subband or an SBFD subband)

The maximum number of UL subbands for an SBFD operation in an SBFD symbol within a TDD carrier may be one. A UL subband may be located at one side of a carrier. Alternatively, the UL subband may be located at the center of the carrier. For semi-static indication of a frequency location of an SBFD subband, the following option(s) may be considered.
- Option 1: Frequency locations of a UL subband and DL subband(s) may be explicitly configured. Guard band(s) may be implicitly derived from RB(s) not belonging to the UL subband or the DL subband(s).
- Option 2: A location of a UL subband and a number of RBs for guard band(s) may be explicitly configured. DL subband(s) may be implicitly derived from RB(s) not belonging to the UL subband or the guard band(s).

Frequency-domain resources of a subband may be identical across different SBFD symbols within a TDD carrier. When DL subband(s) are explicitly indicated, a frequency location of cell-specific UL subbands may be indicated based on a common resource block (CRB) grid. RB-level granularity may be supported for semi-static indication of a frequency location of an SBFD subband.

Frequency resources of a UL subband within an active UL BWP may be referred to as UL-usable PRBs. Frequency resources of DL subband(s) within an active DL BWP may be referred to as DL-usable PRBs.

To determine UL/DL-usable PRBs, the following options may be considered.
- Option 1: UL-usable PRBs may be determined as an intersection between a cell-specific UL subband and an active UL BWP within SBFD symbols. DL-usable PRBs may be determined as an intersection between cell-specific DL subband(s) and the active DL BWP within SBFD symbols.
- Option 2: UL/DL-usable PRBs may be explicitly configured in an active UL/DL BWP within SBFD symbols.

A terminal supporting an SBFD operation may not expect communication (e.g., UL communication and/or DL communication) in a guard band existing between a DL subband and a UL subband. A frequency location of an SBFD subband may be configured based on a CRB grid. To reduce implementation complexity, frequency locations of SBFD subbands in adjacent SBFD symbols may be configured to be the same. A frequency location of a UL subband may be configured based on the following scheme(s).

A base station may inform a terminal of information on a size of a UL subband (e.g., a number of PRBs and/or a number of SCs (subcarriers)) through signaling. The terminal may receive the size information of the UL subband based on the signaling from the base station. The base station may inform the terminal, through signaling, of "a UL subband (e.g., a reference PRB of the UL subband) being configured in upper PRB(s) or SC(s) from the lowest PRB of a BWP in the frequency domain", "a UL subband (e.g., a reference PRB of the UL subband) being configured in lower PRB(s) or SC(s) from the highest PRB of the BWP in the frequency domain", or "a UL subband being configured in both directions with reference to a center of the BWP in the frequency domain". The terminal may receive the above-described information (e.g., configuration of the UL subband) through the signaling from the base station. A 2-bit indicator may be used for signaling of the above-described information. A reference PRB may be the lowest PRB, the highest PRB, or a center PRB of the UL subband.

A guard band may exist in SBFD symbols. A configuration (e.g., a size or a location) of a guard band may be defined in technical specifications. Alternatively, the base station may transmit the configuration of the guard band to the terminal through signaling. The terminal may receive the configuration of the guard band through the signaling from the base station. Information indicating whether the guard band exists may be transmitted together with the configuration of the guard bands. The base station may transmit a PRB offset based on a CRB to the terminal. The PRB offset may be used to indicate a reference PRB of a UL subband (e.g., the lowest PRB, a starting PRB). The PRB offset may be an offset between the reference PRB of the UL subband and the lowest RB (or the highest RB) of the CRB.

When a UL subband is configured in a center portion of a carrier (or BWP, CRB), the UL subband may collide with an SSB resource. To avoid the collision, the base station may configure the UL subband in an edge portion of the carrier (or BWP, CRB). The terminal may receive a configuration of the UL subband from the base station. The terminal may ignore a configuration of the UL subband for a slot including SSB transmission, and may expect reception of the SSB transmission in the slot. When a part or all of the UL subband overlaps the SSB resource, the terminal may not expect UL transmission in the entirety of the UL subband. Alternatively, when a part of the UL subband overlaps the SSB resource, the terminal may expect UL transmission in a remaining part of the UL subband that does not overlap the SSB resource. Alternatively, the terminal may perform UL transmission after a time gap following a resource overlapping the SSB resource within the UL subband. When a resource for SSB transmission overlaps the UL subband, the base station may expect that the above-described operations are performed. The above-described operations may be performed because the priority of SSB transmission (e.g., synchronization) is higher than the priority of UL transmission.

### Indication of a UL subband

At least configuration of time resources and/or frequency resources of a UL subband may be performed based on cell-specific configuration (e.g., cell-specific signaling) and/or UE-specific configuration (e.g., UE-specific signaling). Based on the UE-specific configuration, an FL resource may be configured as a DL resource. Since a UL subband may be configured in the DL resource (e.g., SBFD symbols), the UL subband may be configured based on not only cell-specific configuration but also UE-specific configuration. A slot format indicator (SFI) may be used to configure a UL/DL pattern. When configuring a UL/DL pattern using the SFI, when a UL subband exists in a previous DL resource (e.g., an SBFD symbol), the base station may transmit, to the terminal, an SFI including information (e.g., indication information) indicating whether the UL subband is used (e.g., configured) in a resource changed from an FL resource to a DL resource. The terminal may receive the SFI from the base station, and may identify the information (e.g., the indication information) included in the SFI.

For example, when the indication information included in the SFI indicates an on state and the FL resource is changed to the DL resource, the UL subband configured in the DL resource before the FL resource may be utilized as a UL subband in the same frequency resource of the corresponding DL resource until the corresponding pattern (e.g., the UL/DL pattern, the UL subband pattern) ends.

The base station may configure a guard band for each terminal. A configuration of a guard band (e.g., a size, a location) may be independently configured for each terminal. Candidate values for the configuration of the guard band may be defined in technical specifications. Alternatively, the base station may configure (e.g., indicate) candidate values for the configuration of the guard band for the terminal through signaling (e.g., an RRC message), and may transmit, to the terminal, a signaling message (e.g., MAC CE or DCI) including information indicating one value among the candidate values. The terminal may identify the one value among the candidate values for the configuration of the guard band through the signaling.

Configuration information of cell-specific resources may be delivered through a system information block (SIB). The periodicity of a UL subband in the time domain may be the same as the periodicity of a UL/DL pattern configured by a TDD common configuration. When a utilization frequency of the UL subband is low, the terminal may increase the periodicity of the UL subband. For example, the terminal may increase the periodicity of the UL subband by n times. n may be a natural number. In this case, the UL subband may be intermittently configured in the time domain. Information on n may be included in configuration information of the UL subband. When two UL/DL patterns are configured by the TDD common configuration, the periodicity of the UL subband may be configured as a sum of periodicity p1 of UL/DL pattern 1 and periodicity p2 of UL/DL pattern 2. Alternatively, the periodicity of the UL subband may be configured as m×(p1+p2). m may be a natural number. Information on m may be included in the configuration information of the UL subband and/or configuration information of the UL/DL pattern.

A start point and an end point of a UL subband in the time domain may be configured according to one of the following schemes or a combination of two or more of the following schemes. For example, the base station may transmit information according to each scheme to the terminal through signaling. The terminal may identify the start point and the end point of the UL subband based on the information received through the signaling from the base station, and may configure the UL subband based on the start point and the end point.
- Scheme 1: a start symbol and a duration of a UL subband
- Scheme 2: a start symbol and an end symbol of a UL subband
- Scheme 3: slot(s) for a UL subband (e.g., slot(s) in which the UL subband is configured), a start symbol, a duration, and/or an end symbol of the UL subband within the slot(s)
- Scheme 4: an N(non)-UL subband (e.g., an N-SBFD symbol) may be configured in the same or similar scheme as Scheme 3, and a subband other than the N-UL subband may be determined (e.g., configured) as a UL subband. The N-UL subband may be a DL subband and/or an FL subband.
- Scheme 5: a number of slots and/or a number of symbols for a consecutive UL subband (e.g., an SBFD subband). The slots may be configured (e.g., indexed) based on a first slot of a UL/DL pattern. The symbols may be configured (e.g., indexed) based on a first symbol of the UL/DL pattern. Alternatively, the symbols may be configured (e.g., indexed) based on an end symbol of a slot (e.g., the first slot of the UL/DL pattern).
- Scheme 6: an N-UL subband may be configured in the same or similar scheme as Scheme 5, and a subband other than the N-UL subband may be determined (e.g., configured) as a UL subband.

The base station may transmit a configuration of a guard band between a UL subband and an N-UL subband to the terminal through signaling (e.g., cell-specific signaling). The terminal may receive the configuration of the guard band through the signaling from the base station. Alternatively, the configuration of the guard band may be defined in technical specifications. Alternatively, the guard band may be configured for the terminal by UE-specific signaling. The guard band may be independently configured in consideration of capability of the terminal. When the guard band is configured by UE-specific signaling, resource efficiency may be improved.

The base station may transmit frequency configuration information of a UL subband to the terminal through signaling. The terminal may obtain the frequency configuration information of the UL subband through the signaling from the base station. For example, the base station may configure (e.g., indicate) a number of RBs of the UL subband for the terminal, may configure (e.g., indicate) a start point and/or an end point of the UL subband in the frequency domain for the terminal, and may configure consecutive RBs as the UL subband.

The base station may transmit information on a start point (e.g., a start location) of a UL subband in the frequency domain to the terminal through signaling. The terminal may obtain the information on the start point of the UL subband in the frequency domain through the signaling from the base station. The start point of the UL subband may be the lowest PRB in a BWP, the highest PRB in the BWP, or the center PRB of the BWP. Alternatively, the start point of the UL subband may be limited to the lowest PRB in the BWP or the highest PRB in the BWP. In this case, the base station may inform the terminal of the start point of the UL subband in the frequency domain using a 1-bit indicator. A first bit indicator set to a first value (e.g., 0) may indicate that the start point of the UL subband is the lowest PRB in the BWP. The first bit indicator set to a second value (e.g., 1) may indicate that the start point of the UL subband is the highest PRB in the BWP.

Alternatively, the start point of the UL subband may be limited to the lowest PRB in the BWP or the center PRB of the BWP. Alternatively, the start point of the UL subband may be limited to the highest PRB in the BWP or the center PRB of the BWP. In this case, the base station may inform the terminal of the start point of the UL subband (e.g., "the lowest PRB or the center PRB" or "the highest PRB or the center PRB") using a 1-bit indicator. When the UL subband starts from the center PRB of the BWP, p PRB(s) above the center PRB and k PRB(s) below the center PRB may be configured as the UL subband. Each of p and k may be a natural number. p and k may have the same value or different values.

RB information (e.g., PRB information) may indicate frequency resources of a DL subband and/or frequency resources of a UL subband. The base station may transmit the RB information to the terminal through signaling. The terminal may obtain the RB information through the signaling from the base station. When the RB information indicates a number of RBs for the DL subband, the terminal may assume, as the UL subband, RBs excluding the DL subband, a guard band defined in technical specifications, and/or a guard band configured by the base station among all RBs (e.g., all RBs belonging to the BWP). Alternatively, when the RB information indicates a number of RBs for the UL subband, the terminal may assume, as the DL subband, RBs other than the UL subband, a guard band defined in technical specifications, and/or a guard band configured by the base station among all RBs (e.g., all RBs belonging to the BWP). Alternatively, when the RB information indicates a number of RBs for the DL subband and the UL subband, the terminal may assume RBs between the DL subband and the UL subband as a guard band.

The base station may configure (e.g., indicate) information on a reference SCS for configuration of the UL subband and/or the DL subband for the terminal through signaling. The terminal may receive the information on the reference SCS through the signaling from the base station. The terminal and/or the base station may determine a start point and/or an end point of the DL subband and/or the UL subband according to an offset configured based on the reference SCS (e.g., an offset in units of RBs). A start RB of the offset (e.g., a reference RB) may be the same as a start RB of the BWP. In this case, a separate reference RB does not need to be configured. For common configuration for a plurality of BWPs, CRB0 may be configured (e.g., regarded) as the reference RB.

### Tx/Rx measurement procedure

UL-usable PRBs may be PRBs in which the terminal is able to perform UL transmission. The UL-usable PRBs may be configured in units of PRBs. DL-usable PRBs may be PRBs in which the terminal is able to perform DL reception. The DL-usable PRBs may be configured in units of PRBs. The UL-usable PRBs and the DL-usable PRBs may be implicitly configured based on the UL subband and/or the DL subband(s) configured based on the above-described indication.

A guard period and/or a guard band may be used as the UL-usable PRBs and the DL-usable PRBs. When the UL subband and an N-UL subband coexist within a single slot (e.g., when SBFD symbol(s) exist), in consideration of interference with another terminal and/or performance degradation, the terminal may not expect all DL receptions or all UL transmissions in the entire slot. When a gap exists in the time domain, the terminal may expect DL reception in DL resources and/or UL transmission in UL resources. The gap may have a length defined in technical specifications (e.g., a length in units of symbols or a length in units of time). The gap may refer to a time gap.

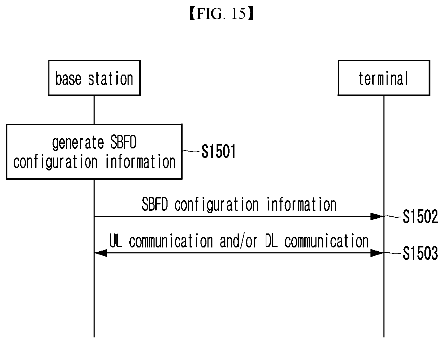

FIG. 15 is a sequence diagram illustrating a method of configuring a UL subband.

As shown in FIG. 15, a base station may generate SBFD configuration information (S1501). The SBFD configuration information may include configuration information for a UL subband configured in a DL duration in the time domain. The SBFD configuration information may include at least one of an index of a start slot of the UL subband, an index of a start symbol of the UL subband within the start slot, an index of an end slot of the UL subband, or an index of an end symbol of the UL subband within the end slot. The index may be interpreted as an offset for a reference point. For example, when the reference point is a subframe or frame boundary, a slot offset may be interpreted as a slot index. When the reference point is a slot boundary, a symbol offset may be interpreted as a symbol index.

The base station may transmit the SBFD configuration information to the terminal through signaling (S1502). The SBFD configuration information may be included in TDD-UL-DL-configuration common information (e.g., *TDD-UL-DL-ConfigCommon*). The SBFD configuration information may be included in TDD-UL-DL-pattern information (e.g., *TDD-UL-DL-Pattern*) included in the TDD-UL-DL-configuration common information. The TDD-UL-DL-configuration common information (e.g., the TDD-UL-DL-pattern information) may indicate a DL duration and/or a UL duration. A duration that is not indicated as the DL duration or the UL duration by the TDD-UL-DL-configuration common information (e.g., the TDD-UL-DL-pattern information) may be an FL duration. In the present disclosure, signaling may be at least one of system information (SI) signaling (e.g., SIB1), RRC signaling, MAC CE signaling, or DCI signaling.

In step S1502, the terminal may receive the SBFD configuration information from the base station. The terminal may identify information included in the SBFD configuration information, and may configure (e.g., identify) the UL subband based on the identified information. For example, the terminal may identify the start point of the UL subband in at least one duration among the DL duration or the FL duration in the time domain based on the index of the start slot of the UL subband and/or the index of the start symbol of the UL subband within the start slot included in the SBFD configuration information. The terminal may identify the end point of the UL subband in at least one duration among the DL duration or the FL duration in the time domain based on the index of the end slot of the UL subband and/or the index of the end symbol of the UL subband within the end slot included in the SBFD configuration information.

In addition, the base station may identify the start point of the UL subband in the DL duration in the time domain based on the index of the start slot of the UL subband and/or the index of the start symbol of the UL subband within the start slot included in the SBFD configuration information. The base station may identify the end point of the UL subband in the DL duration in the time domain based on the index of the end slot of the UL subband and/or the index of the end symbol of the UL subband within the end slot included in the SBFD configuration information.

In step S1503, the terminal may perform UL communication with the base station using at least one resource within a duration from the start point to the end point of the UL subband (e.g., the UL subband within the SBFD symbols and/or an SBFD duration), and the terminal may perform DL communication with the base station using a subband other than the UL subband (e.g., a DL subband). The base station may expect that the terminal performs UL communication using at least one resource in the duration from the start point to the end point of the UL subband. The base station may expect that the terminal performs DL communication using the subband other than the UL subband (e.g., the DL subband). In step S1503, the base station may perform UL communication and/or DL communication with the terminal.

When DL resources exist before the UL subband in the time domain, in step S1503, UL communication may be performed after preconfigured UL resources from the start point of the UL subband. The preconfigured UL resources may be configured in units of symbols or in units of slots. The base station may transmit information on the preconfigured UL resources to the terminal through signaling. The terminal may receive the information on the preconfigured UL resources through the signaling from the base station. Alternatively, when DL resources exist before the UL subband in the time domain, DL communication may not be performed in a duration until preconfigured DL resources preceding the start point of the UL subband. The preconfigured DL resources may be configured in units of symbols or in units of slots. The base station may transmit information on the preconfigured DL resources to the terminal through signaling. The terminal may receive the information on the preconfigured DL resources through the signaling from the base station.

After step S1502, the base station may transmit a message indicating activation of the UL subband configured by the SBFD configuration information to the terminal through signaling. The terminal may receive the message indicating activation of the UL subband (hereinafter, referred to as an "activation message") through the signaling from the base station. When the activation message is transmitted and received, the terminal and/or the base station may determine that the UL subband configured by the SBFD configuration information is activated. In step S1503, UL communication may be performed using the activated UL subband. When the activation message is received in a first DL duration, a UL subband configured in the earliest second DL duration or the earliest FL duration after the first DL duration in the time domain may be activated. A UL duration, an FL duration, and/or a guard period may exist between the first DL duration and the second DL duration. The above-described activation procedure of the UL subband may be selectively performed. For example, the exemplary embodiment of FIG. 15 may involve the activation procedure of the UL subband. Alternatively, the exemplary embodiment of FIG. 15 may be performed without the activation procedure of the UL subband.

In the present disclosure, configuration information for the UL subband may be transmitted through RRC signaling. The configuration information for the UL subband may be transmitted after transmission of the TDD configuration information. The operation according to the present disclosure may be applied not only to licensed spectrum but also to unlicensed spectrum and/or other spectrum. The operation according to the present disclosure may be extended and applied to determination and/or control of transmission power for sidelink and/or transmission power for supplementary uplink (SUL).

In the present disclosure, the terminal may transmit, to the base station, information indicating whether the function(s) proposed in the present disclosure are supported. The information indicating whether the function(s) are supported may be included in a UE capability report. The base station may receive the UE capability report from the terminal, and may perform signaling and/or an operation based on UE capability information included in the UE capability report (e.g., information indicating whether the function(s) are supported).

The operations of the method according to the exemplary embodiment of the present disclosure can be implemented as a computer readable program or code in a computer readable recording medium. The computer readable recording medium may include all kinds of recording apparatus for storing data which can be read by a computer system. Furthermore, the computer readable recording medium may store and execute programs or codes which can be distributed in computer systems connected through a network and read through computers in a distributed manner.

The computer readable recording medium may include a hardware apparatus which is specifically configured to store and execute a program command, such as a ROM, RAM or flash memory. The program command may include not only machine language codes created by a compiler, but also high-level language codes which can be executed by a computer using an interpreter.

Although some aspects of the present disclosure have been described in the context of the apparatus, the aspects may indicate the corresponding descriptions according to the method, and the blocks or apparatus may correspond to the steps of the method or the features of the steps. Similarly, the aspects described in the context of the method may be expressed as the features of the corresponding blocks or items or the corresponding apparatus. Some or all of the steps of the method may be executed by (or using) a hardware apparatus such as a microprocessor, a programmable computer or an electronic circuit. In some embodiments, one or more of the most important steps of the method may be executed by such an apparatus.

In some exemplary embodiments, a programmable logic device such as a field-programmable gate array may be used to perform some or all of functions of the methods described herein. In some exemplary embodiments, the field-programmable gate array may be operated with a microprocessor to perform one of the methods described herein. In general, the methods are preferably performed by a certain hardware device.

The description of the disclosure is merely exemplary in nature and, thus, variations that do not depart from the substance of the disclosure are intended to be within the scope of the disclosure. Such variations are not to be regarded as a departure from the spirit and scope of the disclosure. Thus, it will be understood by those of ordinary skill in the art that various changes in form and details may be made without departing from the spirit and scope as defined by the following claims.

## Claims

1. A method of a user equipment (UE), the method comprising:
receiving, from a base station, subband full-duplex (SBFD) configuration information;
identifying a start point of an uplink (UL) subband in at least one duration among a downlink (DL) duration or a flexible (FL) duration in time domain, based on information included in the SBFD configuration information; and
performing UL communication with the base station using the UL subband based on the start point.

2. The method of claim 1, further comprising: identifying an end point of the UL subband in the at least one duration among the DL duration or the FL duration in time domain, based on the information included in the SBFD configuration information,
wherein the UL communication is performed in at least one resource within a duration from the start point to the end point.

3. The method of claim 2, wherein the SBFD configuration information includes at least one of an index of a start slot of the UL subband, an index of a start symbol of the UL subband within the start slot, an index of an end slot of the UL subband, or an index of an end symbol of the UL subband within the end slot.

4. The method of claim 1, wherein the SBFD configuration information is included in time division duplexing (TDD)-UL-DL configuration common information, the TDD-UL-DL configuration common information further includes periodicity information of a UL/DL pattern, the DL duration and a UL duration are configured based on the periodicity information of the UL/DL pattern, and the TDD-UL-DL configuration common information is transmitted from the base station to the UE.

5. The method of claim 1, further comprising: receiving, from the base station, a first message indicating activation of the UL subband configured by the SBFD configuration information,
wherein the first message is a medium access control (MAC) control element (CE) or downlink control information (DCI), and the UL communication is performed using the activated UL subband.

6. The method of claim 5, wherein, based on the first message being received in a first DL duration, the UL subband configured in an earliest second DL duration or an earliest FL duration after the first DL duration in time domain is activated.

7. The method of claim 1, wherein, based on DL resources existing before the UL subband in time domain, the UL communication is performed after preconfigured resources from the start point of the UL subband.

8. The method of claim 1, wherein, based on DL resources existing before the UL subband in time domain, DL communication is not performed in a duration until preconfigured resources preceding the start point of the UL subband.

9. A method of a base station, the method comprising:
generating subband full-duplex (SBFD) configuration information;
transmitting the SBFD configuration information to a user equipment (UE);
identifying a start point of an uplink (UL) subband in at least one duration among a downlink (DL) duration or a flexible (FL) duration in time domain, based on information included in the SBFD configuration information; and
performing UL communication with the UE using the UL subband based on the start point.

10. The method of claim 9, further comprising: identifying an end point of the UL subband in the at least one duration among the DL duration or the FL duration in time domain, based on the information included in the SBFD configuration information,
wherein the UL communication is performed in at least one resource within a duration from the start point to the end point.

11. The method of claim 10, wherein the SBFD configuration information includes at least one of an index of a start slot of the UL subband, an index of a start symbol of the UL subband within the start slot, an index of an end slot of the UL subband, or an index of an end symbol of the UL subband within the end slot.

12. The method of claim 9, wherein the SBFD configuration information is included in time division duplexing (TDD)-UL-DL configuration common information, the TDD-UL-DL configuration common information further includes periodicity information of a UL/DL pattern, the DL duration and a UL duration are configured based on the periodicity information of the UL/DL pattern, and the TDD-UL-DL configuration common information is transmitted from the base station to the UE.

13. The method of claim 9, further comprising: transmitting, to the UE, a first message indicating activation of the UL subband configured by the SBFD configuration information,
wherein the first message is a medium access control (MAC) control element (CE) or downlink control information (DCI), and the UL communication is performed using the activated UL subband.

14. The method of claim 13, wherein, based on the first message being transmitted in a first DL duration, the UL subband configured in an earliest second DL duration or an earliest FL duration after the first DL duration in time domain is activated.

15. The method of claim 9, wherein, based on DL resources existing before the UL subband in time domain, the UL communication is performed after preconfigured resources from the start point of the UL subband.

16. The method of claim 9, wherein, based on DL resources existing before the UL subband in time domain, DL communication is not performed in a duration until preconfigured resources preceding the start point of the UL subband.

17. A user equipment (UE) comprising at least one processor, wherein the at least one processor causes the UE to perform:
receiving, from a base station, subband full-duplex (SBFD) configuration information;
identifying a start point of an uplink (UL) subband in at least one duration among a downlink (DL) duration or a flexible (FL) duration in time domain, based on information included in the SBFD configuration information; and
performing UL communication with the base station using the UL subband based on the start point.

18. The UE of claim 17, wherein the at least one processor further causes the UE to perform: identifying an end point of the UL subband in the at least one duration among the DL duration or the FL duration in time domain, based on the information included in the SBFD configuration information,
wherein the UL communication is performed in at least one resource within a duration from the start point to the end point.

19. The UE of claim 18, wherein the SBFD configuration information includes at least one of an index of a start slot of the UL subband, an index of a start symbol of the UL subband within the start slot, an index of an end slot of the UL subband, or an index of an end symbol of the UL subband within the end slot.

20. The UE of claim 17, wherein the SBFD configuration information is included in time division duplexing (TDD)-UL-DL configuration common information, the TDD-UL-DL configuration common information further includes periodicity information of a UL/DL pattern, the DL duration and a UL duration are configured based on the periodicity information of the UL/DL pattern, and the TDD-UL-DL configuration common information is transmitted from the base station to the UE.
